(19) Europäisches Patentamt / European Patent Office / Office européen des brevets

(11) **EP 4 541 843 A1**

(12) **EUROPEAN PATENT APPLICATION**
published in accordance with Art. 153(4) EPC

(43) Date of publication:
23.04.2025 Bulletin 2025/17

(21) Application number: 23823874.5

(22) Date of filing: 12.06.2023

(51) International Patent Classification (IPC):
*C08J 9/18* (2006.01)          *C08L 23/00* (2006.01)
*C08L 25/04* (2006.01)

(52) Cooperative Patent Classification (CPC):
C08J 9/18; C08L 23/00; C08L 25/04

(86) International application number:
PCT/JP2023/021685

(87) International publication number:
WO 2023/243584 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.06.2022 JP 2022096830

(71) Applicant: Sekisui Kasei Co., Ltd.
Kita-ku
Osaka-shi
Osaka 530-8565 (JP)

(72) Inventors:
• ISAYAMA, Akira
Osaka-shi, Osaka 530-8565 (JP)
• YAMASHITA, Masashi
Osaka-shi, Osaka 530-8565 (JP)

(74) Representative: Hoffmann Eitle
Patent- und Rechtsanwälte PartmbB
Arabellastraße 30
81925 München (DE)

(54) **COMPOSITE RESIN PARTICLES, FOAMABLE PARTICLES, FOAMED PARTICLES, MOLDED FOAM, AND PRODUCTION METHOD FOR COMPOSITE RESIN PARTICLES**

(57)    An object of the present invention is to provide composite resin particles that can give a foam molded body having excellent strength without undergoing an annealing step in the production of the composite resin particles, and to also provide foam particles that allow relatively fast dissipation of a foaming agent and can reduce the molding cycle of the foam molded body. The present invention relates to the following polystyrene-based composite resin particles (C). Polystyrene-based composite resin particles (C) for producing a foam molded body, the composite resin particles (C) comprising a polyolefin-based resin and a polystyrene-based resin at a mass ratio of 10:90 to 50:50, wherein in an image of the composite resin particles (C) obtained by the following method, (1) a bicontinuous structure of the polyolefin-based resin and the polystyrene-based resin is observed, (2) one or more polystyrene-based resin fine particles having a particle size of 1.0 μm or more are observed, and (3) the area ratio of the polystyrene-based resin fine particles having a particle size of 1.0 μm or more is 1 to 50%. Image acquisition method: The composite resin particles (C) are each sliced along a line passing through the center of the particle, and the resulting thin film is photographed with a transmission electron microscope to obtain an image of a square area having sides of 10 μm and including the center of the particle.

EP 4 541 843 A1

## Description

Technical Field

The present invention relates to seed particles, composite resin particles, expandable particles, foam particles, a foam molded body, a method for producing composite resin particles, and the like.

Background Art

Foam molded bodies made of polystyrene-based resins are widely used as packaging materials or insulation materials because they have excellent cushioning and insulation properties and are easy to mold. However, due to their insufficient impact resistance and flexibility, cracking and chipping are likely to occur, making them unsuitable for packaging precision equipment products, for example. On the other hand, foam molded bodies made of polyolefin-based resins have excellent impact resistance and flexibility, but require large-scale equipment for molding them. In addition, due to the nature of the resin, they must be transported in the form of foam particles from the raw material manufacturer to the molding manufacturer. This poses the problem of having to transport bulky foam particles, which increases production costs. Therefore, various polystyrene-based composite resin particles and foam molded bodies using them have been proposed, which combine the characteristics of the above two different resins.

For example, JP2005-97555A (PTL 1) discloses polystyrene-based composite resin particles obtained by cutting a melt-kneaded resin mixture of an ethylene-vinyl acetate copolymer resin containing a specific amount of a polystyrene-based resin to obtain core resin particles in which a polystyrene-based resin with a specific particle size is dispersed, impregnating and polymerizing the core resin particles with styrene, followed by an annealing treatment step, and further followed by polymerization. PTL 1 indicates that the composite resin particles have a polystyrene component with a specific particle size present in the surface layer at a specific area ratio; that is, the presence of lumps of the polystyrene component, which holds a foaming agent, in the surface layer of the composite resin particles promotes the dissipation of the foaming agent present in the surface layer.

Further, JP2016-190991A (PTL 2) discloses that in order to produce polypropylene-based resin particles for seed polymerization, when a polypropylene-based resin is placed in an extruder, a polystyrene-based resin having specific resin characteristics, specifically a specific MFR and melt tension, is added, thereby making it possible to increase the rigidity of a styrene-modified polypropylene-based composite resin foam body obtained thereafter, and to satisfy the high quality required for industrial applications.

JP2009-114432A (PTL 3) discloses styrene-modified polyethylene-based resin particles obtained by impregnating and polymerizing a polyethylene-based resin with a styrene-based monomer. PTL 3 discloses that the resin particles have a bicontinuous structure of the polyethylene-based resin and a polystyrene-based resin, with an average layer thickness of 0.3 to 1.0 $\mu$m, in the center of the resin particles, that foam particles obtained from the resin particles contain 10 to 35 wt.% of xylene-insoluble gel components, and that the resulting foam molded body has excellent molding processability even after the dissipation of a foaming agent within the foam particles, and also has high crack resistance.

JP2011-42718A (PTL 4) discloses expandable modified resin particles containing a physical foaming agent in a base resin in which a dispersed phase mainly made of a styrene-based resin is dispersed in a continuous phase mainly made of an olefin-based resin. PTL 4 discloses that the resin particles have a volume average size of the dispersed phase of 0.55 $\mu$m or more, have excellent foaming agent retention, and can give a foam molded body that exhibits excellent tenacity (toughness) specific to olefin-based resins after foaming and molding in a mold.

Citation List

Patent Literature

PTL 1: JP2005-97555A
PTL 2: JP2016-190991A
PTL 3: JP2009-114432A
PTL 4: JP2011-42718A

Summary of Invention

Technical Problem

Due to the presence of a bicontinuous structure in the particle center, the resin particles disclosed in PTL 3 can give a foam body that has excellent molding processability even after the dissipation of a foaming agent in the foam particles, and also has high crack resistance; however, the dispersed phase of the polystyrene-based resin is hardly observed in the particle center. Further, in the technology disclosed in PTL 1, when the amount of the polystyrene-based resin increases on the surface of the polystyrene-based composite resin particles, the foam particles become less likely to fuse together during foam molding, and chemical resistance and impact resistance are impaired. In order to prevent these defects, an annealing step is performed for about 2 hours to soften the polyolefin-based resin and promote the transfer of the polystyrene-based resin from the surface.

Due to the presence of the dispersed phase of a polystyrene-based resin in the particle center, the resin particles of PTL 2 and PTL 4 have excellent foaming agent retention, and can give a foam molded body that exhibits excellent tenacity specific to olefin-based resins after foaming and molding in a mold. However, there is almost no bicontinuous structure of a polyethylene-based resin and the polystyrene-based resin in the particle center, and it takes a long time to dissipate the foaming agent retained in the foam particles. Therefore, it also took a long time to adjust the foaming agent content of the foam particles to an amount suitable for foam molding, and the time from foaming agent production to foam molding could not be shortened, resulting in a long molding cycle.

Accordingly, an object of the present invention is to solve the above problems and provide polystyrene-based composite resin particles that can give a foam molded body having excellent strength without undergoing an annealing step, and that can reduce its molding cycle, a method for producing the same, foam particles, and a foam molded body.

Solution to Problem

In view of the above problems, the present inventor found that at least one of the problems can be solved by composite resin particles in which a bicontinuous structure of a polyolefin-based resin and a polystyrene-based resin, and polystyrene-based resin fine particles having a particle size of 1.0 µm or more are allowed to coexist in the center of the composite resin particles. Thus, the present invention has been completed.

The present invention typically includes the following aspects.

Item 1. Polystyrene-based composite resin particles (C) for producing a foam molded body, the composite resin particles (C) comprising a polyolefin-based resin and a polystyrene-based resin at a mass ratio of 10:90 to 50:50, wherein in an image of the composite resin particles (C) obtained by the following method,

(1) a bicontinuous structure of the polyolefin-based resin and the polystyrene-based resin is observed,
(2) one or more polystyrene-based resin fine particles having a particle size of 1.0 µm or more are observed, and
(3) the area ratio of the polystyrene-based resin fine particles having a particle size of 1.0 µm or more is 1 to 50%.
Image acquisition method:
The composite resin particles (C) are each sliced along a line passing through the center of the particle, and the resulting thin film is photographed with a transmission electron microscope to obtain an image of a square area having sides of 10 µm and including the center of the particle.

Item 2. The polystyrene-based composite resin particles (C) according to Item 1, wherein the composite resin particles (C) are seed polymerization composite resin particles of styrene-based monomer-seed particles (B),

the seed particles (B) comprise a styrene-based monomer-polyolefin seed polymerization composite resin (A), which has been melt-kneaded at least once, in an amount of 10 to 80 mass% of the seed particles (B), and
the seed particles (B) further comprise, in addition to a polyolefin-based resin contained in the seed polymerization composite resin (A), a polyolefin-based resin in an amount of 20 to 90 mass% of the seed particles (B).

Item 3. Expandable particles comprising the composite resin particles (C) according to Item 1 or 2, and a foaming agent.
Item 4. Foam particles of the expandable particles according to Item 3.
Item 5. The foam particles according to Item 4, which have a bulk density of 0.012 to 0.20 g/cm³.
Item 6. A foam molded body of the foam particles according to Item 4 or 5.
Item 7. A method for producing composite resin particles (C) for producing a foam molded body, the composite resin particles (C) comprising a polyolefin-based resin and a polystyrene-based resin,

the method comprising impregnating and polymerizing seed particles (B) with a styrene-based monomer to obtain the composite resin particles (C),

wherein the seed particles (B) comprise a styrene-based monomer-polyolefin seed polymerization composite resin (A), which has been melt-kneaded at least once, and

the seed particles (B) further comprise, in addition to a polyolefin-based resin contained in the seed polymerization composite resin (A), a polyolefin-based resin in an amount of 20 to 90 mass% of the seed particles (B).

Item 8. The method for producing composite resin particles (C) according to Item 7, wherein the seed particles (B) comprise a styrene-based monomer-polyolefin seed polymerization composite resin (A), which has been melt-kneaded at least once, in an amount of 10 to 80 mass% of the seed particles (B).

Advantageous Effects of Invention

The present invention can provide composite resin particles that can give a foam molded body having excellent strength without undergoing an annealing step in the production of the composite resin particles.

The present invention can provide foam particles that allow relatively fast dissipation of a foaming agent, and that can reduce the molding cycle of a foam molded body.

According to the present invention, a composite resin derived from a styrene-based monomer-polyolefin composite resin foam molded body produced through seed polymerization can be reused as the seed particles of the present invention.

According to the seed particles etc. of the present invention, a foam molded body having excellent strength can be provided.

Brief Description of Drawings

Fig. 1 is a transmission electron microscope (TEM) image of the center of the composite resin particles of Example 1.
Fig. 2 is a transmission electron microscope (TEM) image of the center of the composite resin particles of Example 2.
Fig. 3 is a transmission electron microscope (TEM) image of the center of the composite resin particles of Example 3.
Fig. 4 is a transmission electron microscope (TEM) image of the center of the composite resin particles of Example 4.
Fig. 5 is a transmission electron microscope (TEM) image of the center of the composite resin particles of Example 5.
Fig. 6 is a transmission electron microscope (TEM) image of the center of the composite resin particles of Comparative Example 1.
Fig. 7 is a transmission electron microscope (TEM) image of the center of the composite resin particles of Comparative Example 2.
Fig. 8 is a transmission electron microscope (TEM) image of the center of the composite resin particles of Comparative Example 3.
Fig. 9 is a transmission electron microscope (TEM) image of the center of the composite resin particles of Comparative Example 4.
Fig. 10 is a transmission electron microscope (TEM) image of the center of the composite resin particles of Example 6.
Fig. 11 is a transmission electron microscope (TEM) image of the center of the composite resin particles of Example 7.
Fig. 12 is a diagram for explaining an example of determining whether particles fall under polystyrene-based resin fine particles having a particle size of 1.0 μm or more. The original TEM image used in this figure is the image of the center of the composite resin particles of Example 7, i.e., the same image as Fig. 11.

In general, in foam molding using foam particles, foam particles are placed in a mold, and expanded and fused by heating to produce a foam molded body. Composite resin foam particles can be broadly classified into foam particles obtained by incorporating a foaming agent into resin particles obtained by melt-kneading base resins (e.g., polyethylene and polystyrene), followed by shredding; and foam particles obtained by incorporating a foaming agent into composite resin particles (also referred to as seed polymerization composite resin particles) obtained by impregnating particles (seed particles) of a resin (e.g., polyethylene) with a monomer of another resin (e.g., styrene), and polymerizing the monomer to form a composite with the base resins.

In the present specification, a composite resin (particles) obtained by impregnating and polymerizing resin seed particles with a monomer is also referred to as a "seed polymerization composite resin (particles)."

In the present specification, a composite resin (particles) obtained by impregnating and polymerizing resin seed particles with a styrene-based monomer is also referred to as a "seed polymerization composite resin (particles) of styrene-based monomer-seed particles."

In the present specification, a composite resin (particles) obtained by impregnating and polymerizing polyolefin-based resin seed particles with a styrene-based monomer is also referred to as a "seed polymerization composite resin (particles) of styrene-based monomer-polyolefin."

In the present specification, the terms "comprise" and "contain" are used with the intention of encompassing the phrases "consisting essentially of" and "consisting of."

Polystyrene-Based Composite Resin Particles (C)

The present invention uses polystyrene-based composite resin particles (C) comprising a polyolefin-based resin and a polystyrene-based resin, wherein a bicontinuous structure of the polyolefin-based resin and the polystyrene-based resin, and polystyrene-based resin fine particles having a particle size of 1.0 $\mu$m or more are allowed to coexist in a specific ratio in the center of the composite resin particles.

For example, the polystyrene-based composite resin particles (C) are for producing a foam molded body, the composite resin particles (C) comprising a polyolefin-based resin and a polystyrene-based resin at a mass ratio of 10:90 to 50:50, wherein in an image of the composite resin particles (C) obtained by the following method,

(1) a bicontinuous structure of the polyolefin-based resin and the polystyrene-based resin is observed,
(2) one or more polystyrene-based resin fine particles having a particle size of 1.0 $\mu$m or more are observed, and
(3) the area ratio of the polystyrene-based resin fine particles having a particle size of 1.0 $\mu$m or more is 1 to 50%.
Image acquisition method:
The composite resin particles (C) are each sliced along a line passing through the center of the particle, and the resulting thin film is photographed with a transmission electron microscope to obtain an image (TEM image) of a square area having sides of 10 $\mu$m and including the center of the particle.

When referred to simply as a "TEM image" in the present specification, it means an image obtained in this manner.

According to the analysis evaluation, such as TEM images, by the present inventor, the resin particles described in PTL 1 to PTL 4 do not satisfy any of the above structures (1) to (3) in the center thereof.

Structure of Particle Center

In the present invention, a resin particle is sliced along the center of the particle, and the resulting thin film is photographed with a transmission electron microscope to obtain an image of a square area having sides of 10 $\mu$m and including the center of the particle. Based on this TEM image, the distribution state of a polyolefin-based resin component and a polystyrene-based resin component in the particle center may be determined. Therefore, the particle center refers to a range that can be confirmed in this image.

Bicontinuous Structure of Polyolefin-Based Resin and Polystyrene-Based Resin

The composite resin particles (C) of the present invention may have a bicontinuous structure of the polyolefin-based resin and the polystyrene-based resin in the particle center. The presence of this structure can be confirmed using TEM images. If a structure is observed in a TEM image in which nearly circular and/or irregular granular polystyrene-based resins are linked together to form a continuous phase, and nearly circular and/or irregular granular polyolefin-based resins are encapsulated within the continuous phase, the presence of a "bicontinuous structure" can be confirmed.

Polystyrene-Based Resin Fine Particles Having Particle Size of 1.0 $\mu$m or More

The composite resin particles (C) of the present invention may have polystyrene-based resin fine particles having a particle size of 1.0 $\mu$m or more in the particle center. The particle size of the polystyrene-based resin fine particles can be confirmed using TEM images, and is preferably 1.0 to 8.0 $\mu$m, and more preferably 1.5 to 3.0 $\mu$m. The polystyrene-based resin fine particles are observed as nearly circular and/or irregular granules in TEM images.

Proportion of Polystyrene-Based Resin Fine Particles Having Particle Size of 1.0 $\mu$m or More

In the composite resin particles (C) of the present invention, the area ratio of the polystyrene-based resin fine particles having a particle size of 1.0 $\mu$m or more in the particle center may be 1 to 50% or 5 to 50%. The area ratio is preferably 10 to 20% because the distribution state of the bicontinuous structure and the polystyrene-based resin fine particles of 1.0 $\mu$m or more is moderate, and the mechanical properties of the foam molded body and the dissipation rate of the foaming agent in the foam particles are improved.

Polystyrene-Based Resin (PS)

The polystyrene-based resin constituting the polystyrene-based composite resin particles (C) is not particularly limited as long as it is a resin mainly made of a styrene-based monomer, and examples include homo- or copolymers of styrene or styrene derivatives.

Examples of styrene derivatives include α-methylstyrene, vinyltoluene, chlorostyrene, ethylstyrene, isopropylstyrene, dimethylstyrene, bromostyrene, and the like. These styrene-based monomers may be used singly or in combination of two or more.

The polystyrene-based resin may be a combination with a vinyl-based monomer copolymerizable with the styrene-based monomer.

Examples of the vinyl-based monomer include divinylbenzenes such as o-divinylbenzene, m-divinylbenzene, and p-divinylbenzene, alkylene glycol di(meth)acrylates such as ethylene glycol di(meth)acrylate and polyethylene glycol di(meth)acrylate, and other polyfunctional monomers;

(meth)acrylonitrile, methyl (meth)acrylate, butyl (meth)acrylate, and the like. Preferred among these are polyfunctional monomers; more preferred are ethylene glycol di(meth)acrylate, polyethylene glycol di(meth)acrylate with 4 to 16 ethylene units, and divinylbenzenes; and particularly preferred are divinylbenzenes and ethylene glycol di(meth)acrylate. The monomers may be used singly or in combination of two or more.

When monomers used in combination, the content thereof is preferably set to an amount in which the styrene-based monomer is the main component. (e.g., 50 mass% or more).

In the present invention, "(meth)acrylic" means "acrylic" or "methacrylic."

Polyolefin-Based Resin (PO)

The polyolefin-based resin constituting the polystyrene-based composite resin particles (C) is not particularly limited, and a resin obtained by a known polymerization method can be used. The polyolefin-based resin is also preferably a resin that does not contain a benzene ring in its structure. Further, the polyolefin-based resin may be crosslinked. Examples of the polyolefin-based resin include polyethylene-based resins (PE), such as branched low-density polyethylene, linear low-density polyethylene, medium-density polyethylene, high-density polyethylene, an ethylene-vinyl acetate copolymer, an ethylene-methyl methacrylate copolymer, and crosslinked products of these polymers; and polypropylene-based resins (PP), such as a propylene homopolymer, an ethylene-propylene random copolymer, a propylene-1-butene random copolymer, and an ethylene-propylene-butene random copolymer. These can be used in combination of two or more.

The polyethylene-based resin is preferably high-density polyethylene, branched low-density polyethylene, linear low-density polyethylene, or an ethylene-vinyl acetate copolymer, and more preferably branched low-density polyethylene or an ethylene-vinyl acetate copolymer.

The polypropylene-based resin is preferably an ethylene-propylene random copolymer, a propylene-1-butene random copolymer, or an ethylene-propylene-butene random copolymer.

The polyolefin-based resin is preferably an ethylene-vinyl acetate copolymer, branched low-density polyethylene, linear low-density polyethylene, linear low-density polyethylene, or an ethylene-propylene random copolymer.

The total content of the polyolefin-based resin and the polystyrene-based resin in the composite resin particles (C) is, for example, 80 mass% or more, preferably 90 mass% or more, and more preferably 95 mass% or more, based on the mass of the composite resin particles (C).

The content of the polyolefin-based resin in the composite resin particles (C) can be, for example, 10 to 50 mass% based on the mass of the composite resin particles (C), preferably 20 to 50 mass%, and more preferably 20 to 45 mass%. A content of the polyolefin-based resin in the composite resin particles (C) within the above range is advantageous in terms of the impact resistance, flexibility, or chemical resistance of the foam molded body.

The content of the polystyrene-based resin in the composite resin particles (C) can be, for example, 50 to 90 mass% based on the mass of the composite resin particles (C), preferably 50 to 80 mass%, and more preferably 55 to 80 mass%. A content of the polystyrene-based resin in the composite resin particles (C) within the above range is advantageous in terms of foaming properties, molding processability, or compression strength.

The composite resin particles (C) contain the polyolefin-based resin and the polystyrene-based resin at a mass ratio of 10:90 to 50:50, preferably 20:80 to 50:50, and more preferably 20:80 to 45:55. A mass ratio of the polyolefin-based resin and the polystyrene-based resin within the above range is advantageous in terms of foaming properties, molding processability, strength, or flexibility.

Seed Polymerization Composite Resin Particles of Styrene-Based Monomer-Seed Particles (B)

The composite resin particles (C) of the present invention may be seed polymerization composite resin particles

of styrene-based monomer-seed particles (B). The seed polymerization composite resin particles of the styrene-based monomer-seed particles (B) are composite resin particles obtained by impregnating and polymerizing the seed particles (B) with a styrene-based monomer, which is so-called seed polymerization. Seed polymerization can be carried out by a known method. For example, the seed particles (B) are impregnated with a styrene-based monomer in an aqueous medium, followed by heating to the polymerization temperature of the monomer, whereby seed polymerization composite resin particles of the styrene-based monomer-seed particles (B) can be obtained.

The seed particles (B) contain a seed polymerization composite resin (A) of styrene-based monomer-polyolefin.

Seed Polymerization Composite Resin (A) of Styrene-Based Monomer-Polyolefin

The seed polymerization composite resin (A) is obtained from composite resin particles, which are obtained by impregnating and polymerizing seed particles of a polyolefin-based resin with a styrene-based monomer, which is so-called seed polymerization. Therefore, the seed polymerization composite resin (A) contains a polyolefin-based resin and a polystyrene-based resin. Seed polymerization can be carried out by a known method. For example, polyolefin is impregnated with a styrene-based monomer in an aqueous medium, followed by heating to the polymerization temperature of the monomer, whereby particles of the seed polymerization composite resin (A) of styrene-based monomer-polyolefin can be obtained.

The use of the seed polymerization composite resin (A) for the seed particles (B) facilitates the presence of a bicontinuous structure of the polyolefin-based resin and the polystyrene-based resin in the particle center of the composite resin particles (C), the presence of polystyrene-based resin fine particles having a particle size of 1.0 $\mu$m or more, and the area ratio of the polystyrene-based resin fine particles having a particle size of 1.0 $\mu$m or more being 1 to 50%.

In the present invention, it is preferable to use a seed polymerization composite resin (A) in which particles of the seed polymerization composite resin (A) are melt-kneaded at least once (preferably once).

As the seed polymerization composite resin (A), typically, composite resin particles obtained by seed polymerization of a styrene-based monomer on polyolefin seed particles, expandable particles of a polyolefin-based resin and a polystyrene-based resin produced from the composite resin particles, foam particles, or a foam molded body can be used. The present invention also has an advantage in that these particles and foam molded body, either used or unused, can be reused as the seed polymerization composite resin (A).

When a foam molded body produced from composite resin particles obtained by seed polymerization of a styrene-based monomer on polyolefin seed particles is used as the seed polymerization composite resin (A), for example, the foam molded body is pulverized, melt-kneaded in an extruder, and granulated into pellets, thereby facilitating the use of the foam molded body as a base resin for the seed particles.

The total content of the polyolefin-based resin and the polystyrene-based resin in the seed polymerization composite resin (A) can be, for example, 80 mass% or more based on the mass of the seed polymerization composite resin (A), preferably 90 mass% or more, more preferably 95 mass% or more, and even more preferably 98 mass% or more.

The content of the polyolefin-based resin in the seed polymerization composite resin (A) can be, for example, 10 to 50 mass% based on the mass of the seed polymerization composite resin (A), preferably 20 to 50 mass%, and more preferably 20 to 45 mass%. A content of the polyolefin-based resin in the seed polymerization composite resin (A) within the above range is advantageous in terms of impact resistance, flexibility, or chemical resistance.

The content of the polystyrene-based resin in the seed polymerization composite resin (A) can be, for example, 50 to 90 mass% based on the mass of the seed polymerization composite resin (A), preferably 50 to 80 mass%, and more preferably 55 to 80 mass%. A content of the polystyrene-based resin in the seed polymerization composite resin (A) within the above range is advantageous in terms of foaming properties, molding processability, or compression strength.

The ratio of the content mass of the polyolefin-based resin and the content mass of the polystyrene-based resin in the seed polymerization composite resin (A) can be, for example, 10:90 to 50:50, preferably 20:80 to 50:50, and more preferably 20:80 to 45:55. A ratio of the content mass of the polyolefin-based resin and the content mass of the polystyrene-based resin in the seed polymerization composite resin (A) within the above range is advantageous in terms of foaming properties, molding processability, strength, or flexibility.

The content of the seed polymerization composite resin (A) in the seed particles (B) can be, for example, 10 to 80 mass% or 10 to 70 mass% based on the mass of the seed particles (B), preferably 10 to 60 mass%, and more preferably 10 to 55 mass%. A content of the seed polymerization composite resin (A) in the seed particles (B) within the above range is advantageous because the distribution state of the bicontinuous structure and the polystyrene-based resin fine particles of 1.0 $\mu$m or more is moderate, and the mechanical properties and the dissipation rate of the foaming agent are improved.

The seed particles (B) may further contain a polyolefin-based resin in addition to the seed polymerization composite resin (A). The amount of the polyolefin-based resin added to the seed polymerization composite resin (A) can be, for example, 20 to 90 mass% or 30 to 90 mass% based on the mass of the seed particles (B), preferably 40 to 90 mass%, and more preferably 45 to 90 mass%, in terms of strength or flexibility. As the polyolefin-based resin added to the seed polymerization composite resin (A), any of the polyolefin-based resins mentioned above as examples can be used.

The content of the polyolefin-based resin in the seed particles (B) can be, for example, 10 to 95 mass% based on the mass of the seed particles (B), preferably 50 to 95 mass%, more preferably 60 to 95 mass%, and even more preferably 65 to 95 mass%. A content of the polyolefin-based resin in the seed particles (B) within the above range is advantageous in terms of strength or flexibility.

The content of the polystyrene-based resin in the seed particles (B) can be, for example, 5 to 90 mass% based on the mass of the seed particles (B), preferably 5 to 50 mass%, more preferably 5 to 40 mass%, and even more preferably 5 to 35 mass%. A content of the polystyrene-based resin in the seed particles (B) within the above range is advantageous because the distribution state of the bicontinuous structure and the polystyrene-based resin fine particles of 1.0 μm or more is moderate, and the mechanical properties and the dissipation rate of the foaming agent are improved.

Particle Size of Seed Particles (B)

The seed particles (B) may have any known shape, but are preferably cylindrical, ellipsoidal (ovoid), or spherical. The shape is more preferably ellipsoidal or spherical in terms of the good filling ability of foam particles formed from the seed particles (B) into the mold.

The seed particles (B) preferably have an average particle size of 0.50 to 1.4 mm. An average particle size of the seed particles (B) within this range is advantageous in terms of high foaming properties and the good filling ability of foam particles during molding processing.

Method for Producing Seed Particles (B)

The seed particles (B) can be produced by melt-kneading base resins, and shredding the melt-kneaded product. The melt-kneading temperature is preferably 120 to 300°C.

The seed particles (B) can be produced by melt-kneading a polyolefin-based resin and a polystyrene-based resin as base resins, and shredding the melt-kneaded product. Alternatively, the seed particles (B) can be produced by melt-kneading the seed polymerization composite resin (A) and a polyolefin-based resin as base resins, and shredding the melt-kneaded product. For example, the seed particles (B) can be produced by melt-kneading and extruding base resins in an extruder to obtain a strand, and cutting the obtained strand in air, in water, or while heating. The resin components may be mixed by a mixer before being placed in the extruder.

Other Components

The composite resin particles (C) may contain other components in addition to the polyolefin-based resin and the polystyrene-based resin. Examples of other components include colorants, nucleating agents, stabilizers, fillers (reinforcing materials), higher fatty acid metal salts, antistatic agents, lubricants, natural or synthetic oils, waxes, UV absorbers, weather stabilizers, anti-fogging agents, anti-blocking agents, slip agents, coating agents, neutron-blocking agents, and other resins, inorganic foam regulators (talc, silica, calcium silicate, calcium carbonate, sodium borate, zinc borate, etc.), and the like. The content of other components may be 10 mass% or less, preferably 5 mass% or less, and particularly preferably 0 mass% (i.e., no other components are contained), based on the mass of the composite resin.

Particle Size of Composite Resin Particles (C)

The composite resin particles (C) preferably have an average particle size of 0.50 to 3.0 mm.

An average particle size of the composite resin particles (C) within this range is advantageous in terms of high foaming properties and the good filling ability of foam particles during molding processing.

The average particle size of the composite resin particles (C) is more preferably 0.50 to 2.0 mm.

Method for Producing Composite Resin Particles (C)

The composite resin particles (C) of the present invention can be obtained by impregnating and polymerizing the seed particles (B) with a desired amount of a styrene-based monomer. The method for producing the composite resin particles (C) of the present invention includes a step of impregnating and polymerizing the seed particles (B) with a styrene-based monomer to obtain the composite resin particles (C). The seed particles (B) may be produced by a step of melt-kneading the seed polymerization composite resin (A) and a polyolefin-based resin, and shredding the melt-kneaded product to obtain the seed particles (B).

The step of impregnating and polymerizing the seed particles (B) with a styrene-based monomer to obtain the composite resin particles (C) can be carried out by using so-called seed polymerization. Seed polymerization can be carried out by a known method. For example, the seed particles (B) are impregnated with a styrene-based monomer in an aqueous medium, followed by heating to the polymerization temperature of the monomer, whereby particles of the seed polymerization composite resin (A) of styrene-based monomer-polyolefin can be obtained.

In the step of impregnating and polymerizing the seed particles (B) with a styrene-based monomer to obtain the composite resin particles (C), the amount of the styrene-based monomer used is such that the ratio of the content mass of the polyolefin-based resin and the content mass of the polystyrene-based resin in the composite resin particles (C) is 10:90 to 50:50, preferably 20:80 to 50:50, and more preferably 20:80 to 45:55.

An example of a method for producing composite resin particles (C) using a seed polymerization method is described below.

First, seed particles (B), a styrene-based monomer, and optionally a polymerization initiator are dispersed in an aqueous suspension. When a polymerization initiator is used, the styrene-based monomer and the polymerization initiator may be mixed in advance.

As the polymerization initiator, one generally used as an initiator for suspension polymerization of styrene-based monomers can be suitably used. Examples include organic peroxides, such as benzoyl peroxide, di-t-butyl peroxide, t-butyl peroxybenzoate, dicumyl peroxide, 2,5-dimethyl-2,5-di-t-butyl peroxyhexane, t-butyl peroxy-3,5,5-trimethylhexanoate, and t-butyl peroxy-2-ethylhexyl carbonate; azo compounds, such as azobisisobutyronitrile and azobisdimethylvaleronitrile; and the like. One or two or more of these polymerization initiators may be used.

Examples of the aqueous medium constituting the aqueous suspension include water and a mixed medium of water and a watersoluble solvent (e.g., $C_{1-6}$ alcohol).

The amount of the polymerization initiator used is preferably 0.010 to 0.90 parts by mass, and more preferably 0.10 to 0.50 parts by mass, based on 100 parts by mass of the styrene-based monomer.

A dispersant may be added to the aqueous suspension, as needed. The dispersant is not particularly limited, and any known dispersant can be used. Specific examples include poorly soluble inorganic substances, such as calcium phosphate, magnesium pyrophosphate, sodium pyrophosphate, and magnesium oxide. Further, a surfactant, such as sodium dodecylbenzenesulfonate, may also be used.

Next, the obtained dispersion is heated to a temperature at which the styrene-based monomer does not substantially polymerize, thereby impregnating the seed particles with the styrene-based monomer. The time for impregnating the seed particles with the styrene-based monomer is not particularly limited, and is preferably 20 minutes to 4 hours, and more preferably 30 minutes to 2 hours.

Then, the styrene-based monomer is polymerized. The polymerization is not particularly limited, but is preferably performed at 115°C to 150°C, preferably at 120°C to 145°C, for 1.5 to 5 hours. The polymerization is generally performed in a closed container that can be pressurized. It is preferable to perform impregnation and polymerization of the styrene monomer multiple times (preferably twice). By performing impregnation and polymerization several times, the shape of the composite resin particles obtained can be made spherical in the first polymerization of the styrene-based monomer, and the amount of polystyrene composited can be adjusted in the second and subsequent polymerizations of the styrene-based monomer. Further, by performing impregnation and polymerization several times, the generation of the polymer powder of the styrene-based resin can be minimized. In addition, in consideration of the decomposition temperature of the polymerization initiator, polymerization may be performed while the styrene-based monomer is impregnated, instead of starting polymerization after the seed particles are impregnated with the styrene-based monomer.

Expandable Particles

The expandable particles contain the composite resin particles (C) of the present invention and a foaming agent, and can be produced by impregnating the composite resin particles (C) with a foaming agent by a known method. The expandable particles can be obtained, for example, by impregnating the composite resin particles (C) during or after polymerization with a foaming agent. Impregnation can be performed by a method known per se. For example, impregnation during polymerization can be performed by performing a polymerization reaction in a closed container, and pressing a foaming agent into the container. Impregnation after polymerization can be performed by, for example, pressing a foaming agent into a closed container containing the composite resin particles (C).

The temperature for impregnating the composite resin particles (C) with a foaming agent is preferably 50 to 130°C, and more preferably 60 to 100°C. An impregnation temperature within the above range is advantageous in that the time required for impregnation can be shortened and coalescence of the expandable particles can be suppressed.

Foaming Agent

As the foaming agent, any of those that have been conventionally used for foaming polystyrene-based resins can be used without any particular limitation. Examples include organic gases, such as propane, n-butane, isobutane, n-pentane, isopentane, cyclopentane, n-hexane, and isohexane; and inorganic gases, such as carbon dioxide, nitrogen, helium, argon, and air. These foaming agents can be used singly or in combination of two or more. The organic gas is preferably any of n-butane, isobutane, n-pentane, and isopentane, or a combination thereof.

The content of the foaming agent in the expandable particles is preferably 5 to 25 mass% based on the mass of the composite resin particles (C). A content of the foaming agent within the above range is advantageous in that sufficient foaming power can be obtained during foam molding, resulting in a beautiful appearance of the foam molded body.

Foaming Aid

The expandable particles may contain a foaming aid together with a foaming agent.

The foaming aid is not particularly limited as long as it is one that has been conventionally used for foaming polystyrene-based resins. Examples include aromatic organic compounds, such as styrene, toluene, ethylbenzene, and xylene; cyclic aliphatic hydrocarbons, such as cyclohexane and methylcyclohexane; and solvents with a boiling point of 200°C or less at 1 atmosphere, such as ethyl acetate and butyl acetate.

The content of the foaming aid in the expandable particles is generally within the range of 0.30 to 2.5 mass%, and preferably 0.50 to 2.0 mass%. A content of the foaming aid within the above range is advantageous in that the plasticizing effect of the polystyrene-based resin is obtained and shrinkage and melting of the foam molded body are suppressed.

Foam Particles

Foam particles (generally also referred to as "pre-foam particles") are particles obtained by preliminarily foaming the composite resin particles (C). For example, foam particles can be obtained by foaming expandable particles impregnated with a foaming agent.

The bulk density of the foam particles is preferably 0.015 $g/cm^3$ to 0.20 $g/cm^3$, more preferably 0.020 $g/cm^3$ to 0.15 $g/cm^3$, and even more preferably 0.020 $g/cm^3$ to 0.10 $g/cm^3$. A bulk density within this range is advantageous in terms of the high strength of the foam molded body and the lightweight of the foam molded body.

The shape of the foam particles is preferably spherical or nearly spherical. The average particle size thereof is preferably 1.0 mm to 9.0 mm, and more preferably 1.2 mm to 6.6 mm.

The foam particles can be obtained by foaming expandable particles to a desired bulk density by a known method. Foaming can be achieved by foaming expandable particles using heating vapor preferably at 0.010 MPa to 0.20 MPa (gauge pressure), and more preferably 0.010 MPa to 0.15 MPa. When the bulk density is within the above range, the foam molded body can be made lightweight. Foaming can be achieved by batch foaming in which vapor is introduced, continuous foaming, release foaming from under pressure, or the like.

Foam particles obtained by pre-foaming expandable particles, which are obtained by incorporating a foaming agent into the composite resin particles (C), produce little powder. Since powder shortens the life of molds, the foam particles of the present invention is useful in extending the life of molds.

If the foam particles contain too much foaming agent, the foam molded product will expand during foam molding, making it difficult to remove from the mold. Therefore, after the production of foam particles, the foaming agent contained in the foam particles is sometimes dissipated to adjust the foaming agent content. However, if the time required for this adjustment is long, the time required to move to foam molding will be long. Therefore, in terms of the molding cycle, it is desirable for the foaming agent to dissipate in a short time. The foam particles of the present invention allow fast dissipation of the foaming agent, and can reduce the molding cycle.

Foam Molded Body

The foam molded body is a foam body composed of a fusion body of foam particles, and is obtained, for example, by foam-molding the foam particles described above in a mold. The foam molded body uses the composite resin particles of the present invention as a raw material, and thus has excellent strength, fusion rate, or molding cycle.

The density of the foam molded body is preferably, for example, 0.015 $g/cm^3$ to 0.30 $g/cm^3$, more preferably 0.020 $g/cm^3$ to 0.25 $g/cm^3$, and even more preferably 0.020 $g/cm^3$ to 0.20 $g/cm^3$. When the density is within this range, excellent lightweight properties and strength can be achieved. The density of the foam molded body is specified by the method described in the Examples.

The 25% compression strength of the foam molded body can be, for example, 0.15 MPa or more, 0.15 MPa to 0.40 MPa, or 0.20 MPa to 0.40 MPa, and preferably 0.25 MPa to 0.35 MPa. The 25% compression strength is specified by the method described in the Examples.

The foam molded body can be obtained by filling a mold of a foam molding machine with foam particles, and thermally fusing the foam particles together while foaming the foam particles by heating. Water vapor can be suitably used as the medium for heating.

Since the foam particles of the present invention are sufficiently foamed and fused even in water vapor at a low pressure (e.g., a gauge pressure of 0.10 MPa or less), the energy required for foam molding can be reduced, the equipment required for foam molding can be simplified, and as a result, the cost required for foam molding can be reduced (i.e., excellent productivity).

According to the present invention, the molding cycle of the foam molded body can be reduced.

The "molding cycle" refers to the time during which the molding machine starts automatic operation, the mold starts to close, the foam particles are placed in the mold, heating and cooling are performed under specified conditions, the mold opens at a specified surface pressure value, and the foam molded body is removed.

The foam molded body can be used for, for example, cushioning materials, packing materials, building materials, shoe members, and sporting goods. Specific examples include midsole members, insole members, or outsole members of shoes; core materials of hitting equipment for sporting goods, such as rackets and bats; protective equipment of sporting goods, such as pads and protectors; medical, nursing, welfare, or health-care goods, such as pads and protectors; tire core materials of bicycles, wheelchairs, etc.; interior materials, seat core materials, shock-absorbing members, vibration-absorbing members, etc. for transportation equipment, such as automobiles, railway vehicles, and airplanes; fenders; floats; toys; floor foundation materials; wall materials; beds; cushions; transportation containers for electronic components, various industrial materials, and foods; and the like.

Preferred are automobile interior materials, shock-absorbing members, vibration-absorbing members, and component packaging materials.

Examples

An embodiment of the present invention will be described in more detail below with reference to Examples and the like; however, the present invention is not limited thereto.

The methods for specifying various physical properties and the like in the Examples etc. are described below.

TEM Image Observation of Center of Composite Resin Particles

The composite resin particles are each thinly sliced so as to pass through the center of the particle, the obtained section is embedded in an epoxy resin, and then an ultrathin section (thickness: 70 nm) is produced using an ultramicrotome (produced by Leica Microsystems, product name: Leica Ultracut UCT).

Then, the ultrathin section is photographed with a transmission electron microscope (TEM, produced by Hitachi High-Tech Corporation, model: H-7600) at a magnification of 3,500x (5,000x, if necessary), and the dispersion state of the polyolefin resin and the polystyrene-based resin is observed in a square area having sides of 10 $\mu$m and including the center of the particle. Ruthenium tetroxide is used as a staining agent.

The distribution state of the polyolefin-based resin component and the polystyrene-based resin component is observed in TEM images. Since the contrast of the polystyrene-based resin component may change depending on the surrounding resin, the distinction is based not only on the contrast caused by the stained state, but also on the unique lamellar structure observed in the polyolefin-based resin.

Particle Size of Polystyrene-Based Fine Particles in Center of Composite Resin Particles

Based on the above TEM images with the scale displayed, the longest and shortest diameters of polystyrene-based resin fine particles, which are nearly circular or irregular, dispersed in the polyolefin-based resin are measured, and the particle size is calculated according to the following formula.

(Particle size of polystyrene-based resin fine particles) = (longest diameter + shortest diameter)/2 ($\mu$m)

Of the particle sizes of the polystyrene-based resin fine particles, the average value of any 20 particles is taken as the average particle size ($\mu$m) of the polystyrene-based resin fine particles.

At this time, nearly circular and/or irregular particles that completely encompass circles with a radius of 0.5 $\mu$m centered on the intersection of the longest and shortest diameters of the particles dispersed in the polyolefin-based resin are determined to be polystyrene-based resin fine particles. The fine continuous phase of the polystyrene-based component located in contact with the polystyrene-based resin fine particles is not regarded as polystyrene-based resin fine particles, but as a part of the bicontinuous structure, and is not used to calculate the particle size.

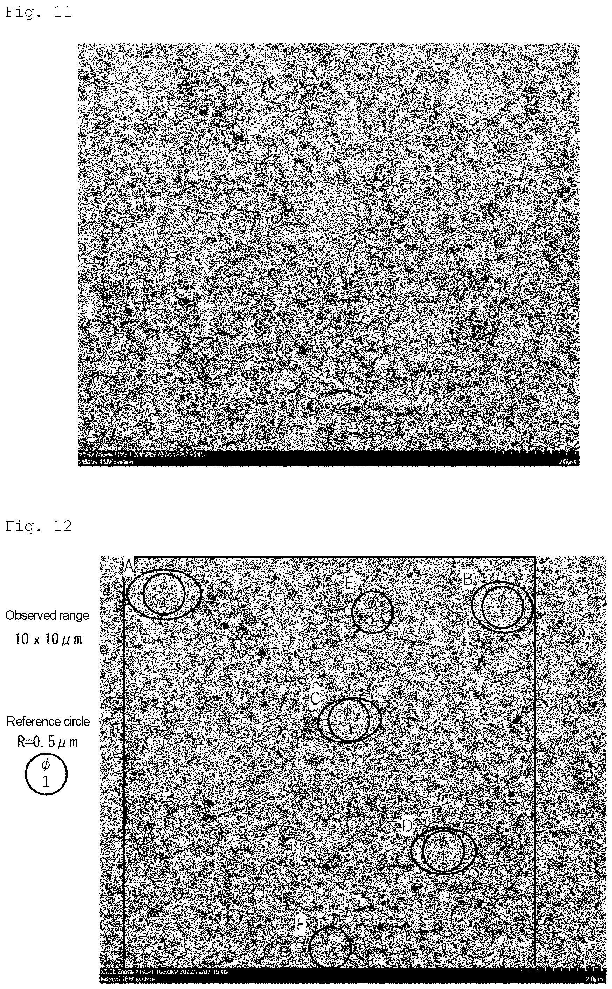

Fig. 12 shows an example of determination as to whether particles fall under polystyrene-based resin fine particles having a particle size of 1.0 $\mu$m or more. In Fig. 12, the photograph is a transmission electron microscope (TEM) image of the center of the composite resin particles of Example 7, and is the same as the TEM image of Fig. 11. The black-line square indicates the observed range (10 $\mu$m $\times$ 10 $\mu$m) for determination. The perfect circle containing $\varphi1$ is a circle with a radius of 0.5 $\mu$m centered on the intersection of the longest and shortest diameters of the particle (reference circle).

The two straight lines that intersect perpendicularly at the intersection indicate the longest and shortest diameters of the particle. Ellipses A to D indicate polystyrene-based resin fine particles having a particle size of 1.0 $\mu$m or more. E and F indicate a case where the particles are determined not to fall under polystyrene-based resin fine particles having a particle size of 1.0 $\mu$m or more because they do not completely contain the reference circle.

Area Ratio of Polystyrene-Based Resin Fine Particles Having Particle Size of 1.0 $\mu$m or More in Center of Composite Resin Particles

When calculating the area ratio, the area of polystyrene-based resin fine particles having a particle size of 1.0 $\mu$m or more calculated in the above manner was used. If part of the polystyrene-based resin fine particles having a particle size of 1.0 $\mu$m or more is included on the boundary line of the 10 $\mu$m square, they will be contained in the area calculated by the following formula.

(Area ratio of polystyrene-based resin fine particles) = (total area A of polystyrene-based resin fine particles)/(area B) $\times$ 100 (%)

Total area A of polystyrene-based resin fine particles ($\mu$m$^2$) is the sum of the areas of polystyrene-based resin fine particles having a particle size of 1.0 $\mu$m or more (PS fine particles), and is calculated by the following formula.

$\Sigma[$(particle size of PS fine particles of 1.0 $\mu$m or more/2)$^2 \times 3.14]$ ($\mu$m$^2$)

Area B is the area of the 10 $\mu$m square, i.e., 10 $\times$ 10 ($\mu$m$^2$).

Gel Fraction of Seed Particles and Composite Resin Particles

1 g of particles precisely weighed using an electronic balance (Mettler) capable of measuring in grams to four decimal places are placed in a 200 ml eggplant flask together with 100 ml of toluene and about 0.4 g of zeolite. The flask is connected to a cooling tube and placed in an oil bath at 130°C. Next, an appropriate amount of water is passed through the cooling tube for heating for 24 hours.

After removing the flask from the oil bath, the contents are immediately filtered through an 80-mesh (diameter: 0.12 mm) wire net. Then, the zeolite and matter insoluble in boiling toluene remaining on the wire net are allowed to stand, together with the wire net, in an oven at 130°C for 1 hour to remove the toluene, and then vacuum-dried for another 2 hours. Thereafter, the solid matter and zeolite remaining on the wire net are removed, together with the wire net, from the oven and allowed to cool in a desiccator for about 1 hour. Then, the total mass Wt (g) of the solid matter and zeolite remaining on the wire net, together with the wire net, is measured.

The mass of the solid matter Ws (g) is calculated by subtracting the mass of the zeolite Wz (g) and the mass of the wire net Wm (g), which have been weighed in advance, from the total mass Wt (g), and further the ratio of this to the mass of the composite resin particles Wb (g), which has also been weighed in advance, is calculated as the gel fraction (mass%).

$$\text{Gel fraction (mass\%)} = (Wt-Wz-Wm)/Wb \times 100$$

Average Particle Size of Composite Resin Particles

The particle size with a cumulative mass of 50% (median diameter: d50) in a cumulative mass distribution curve is taken as the average particle size of the composite resin particles.

Specifically, using a RO-TAP sieve shaker (produced by Iida Seisakusho Co., Ltd.), JIS standard sieves (JIS Z8801-1: 2006) with sieve openings of 4.00 mm, 3.35 mm, 2.80 mm, 2.36 mm, 2.00 mm, 1.70 mm, 1.40 mm, 1.18 mm, 1.00 mm, 0.85 mm, 0.71 mm, 0.60 mm, 0.50 mm, 0.425 mm, 0.355 mm, 0.300 mm, 0.250 mm, 0.212 mm, and 0.180 mm are used to sieve about 50 g of a sample for 10 minutes, and the mass of the sample on the sieve is measured. A cumulative mass distribution curve is created from the obtained results, and the particle size at which the cumulative mass is 50% is taken as the average particle size (mm).

Bulk Density of Foam Particles

The mass B (g) of a measuring cylinder with an internal volume of 100 cm$^3$ is measured, and 110 to 120 cm$^3$ of foam particles are allowed to fall naturally into the measuring cylinder through a funnel. If clumps of the foam particles adhere to the funnel, they are separated apart using a glass rod. The foam particles raised on the measuring cylinder are removed by moving a straightedge along the edge of the measuring cylinder, and the mass A (g) of the measuring cylinder containing the foam particles is measured. The bulk density of the foam particles is calculated by the following formula.

Bulk density ($g/cm^3$) = [mass A (g) - mass B (g)]/volume of measuring cylinder (100 $cm^3$)

Density of Foam Molded Body

The volume Va ($cm^3$) and mass W (g) of a foam molded body obtained after foam molding are measured, and the density of the foam molded body is determined by the following formula.

Density of foam molded body ($g/cm^3$) = mass W (g)/volume Va ($cm^3$)

Chemical Resistance

Three flat rectangular test pieces (100 mm in length, 100 mm in width, and 20 mm in thickness) are cut out from the foam molded body and left for 24 hours at $23\pm2°C$ with a humidity of $50\pm5\%$. The test pieces are each cut out from the foam molded body so that the entire top surface of the test piece is formed from the surface of the foam molded body.
Next, each of the three test pieces is uniformly coated with 1 g of a different chemical (gasoline, kerosene, or dibutyl phthalate (DBP)) on the top surface, and left for 60 minutes at $23\pm2°C$ with a humidity of $50\pm5\%$. Thereafter, the chemical is wiped off from the top surface of the test piece, and the top surface of the test piece is visually observed and evaluated based on the following criteria.

    A: Good, no change
    B: Slightly poor, surface softening
    C: Poor, surface depression (shrinkage)

Fusion Rate of Foam Molded Body

In the horizontal center of a rectangular parallelepiped foam molded body (300 mm in length, 400 mm in width, and 50 mm in height), a cut with a depth of 2 mm is made across the entire width of one surface (300 mm in length and 400 mm in width), and the foam molded body is bent in the direction of widening the cut until the foam molded body breaks or until both ends come together. Next, the broken surface is observed, and the number of foam particles that break internally and foam particles that are peeled off at the interface are counted visually. Then, the ratio of foam particles that break internally to the total number of foam particles that break internally and foam particles that are peeled off at the interface is calculated, and this is expressed as a percentage to obtain the fusion rate (%). Any range of 100 to 150 particles is measured.

Appearance of Foam Molded Body

The appearance of the foam molded body is visually observed and evaluated according to the following criteria.
Specifically, a larger number indicates a smaller gap between the particles. A score of 3 or more on a 5-point scale is considered a pass.

    5: No gaps between particles
    4: Gaps partially observed
    3: Gaps observed in some areas, but within acceptable level
    2: Noticeable gaps
    1: Noticeable gaps, and no commercial value

Compression Strength of Foam Molded Body

The compression strength is measured according to JIS K7220: 2006.
A test piece obtained by cutting the foam molded body into a size of 50 mm in length, 50 mm in width, and 25 mm in thickness is compressed at a compression speed of 10 mm/min, and the strength (MPa) at 25% compression is measured.

Bending Strength of Foam Molded Body

The bending strength (average maximum bending strength) of the foam body is measured according to the method described in JIS K7221-2: 2006.

Five rectangular parallelepiped test pieces (25 mm in length, 130 mm in width, and 20 mm in thickness; one-sided skin underside) are cut from the foam molded body, and left at 23°C±2°C with a humidity of 50±5% for 24 hours. The bending strength (MPa) of the test pieces is measured using a bending strength tester (produced by Orientec Co., Ltd., model: UCT-10T) under the following measurement conditions.

Measurement Conditions

Test speed: 10 mm/min
Distance between supporting points: 100 mm
Deflection: 50 mm
Pressure wedge: 5R
Support stand: 5R

Molding Cycle

The molding cycle refers to the time during which the foam molding machine starts automatic operation, the mold starts to close, the foam particles are placed in the mold, heating and cooling are performed under specified conditions, the mold opens at a specified surface pressure value, and the foam molded body is removed. This time (seconds) is measured in the foam molding step.

Foam molding machine: produced by Sekisui Koki Seisakusho KK, model: ACE-3SP

Heating and cooling conditions: Vapor at a pressure of 0.08 MPa is introduced under the following heating conditions:
mold heating for 5 seconds, one-sided heating for 8 seconds, reverse one-sided heating for 2 seconds, and double-sided heating for 18 seconds, to foam the foam particles. Then, water cooling is performed for 10 seconds, followed by vacuum cooling.
Surface pressure value: 0.02 MPa

Example 1

Production of Seed Particles (B)

A foam molded body obtained from 46 parts by mass of an ethylene-vinyl acetate copolymer (produced by Tosoh Corporation, product name: Ultrasen 20K51A) and styrene-based monomer-polyolefin seed polymerization composite resin particles was crushed, melt-kneaded, and mixed with 54 parts by mass of pelletized styrene-based monomer-polyolefin seed polymerization composite resin (A) (mass ratio of polyolefin-based resin to polystyrene-based resin = 35:65) for 5 minutes to obtain a resin mixture.

Then, the obtained resin mixture was supplied to a tandem extruder (diameter: 65 mm to 50 mm, produced by Toshiba Machine Co., Ltd., model: SE-65) equipped with a four-threaded screw, in which the cylinder temperature had been adjusted so that the resin temperature in the center of the resin flow path in the extruder head was 220°C. The resin mixture was melt-kneaded and granulated by an underwater cutting method to obtain seed particles (B) (average mass: 0.38 mg/particle). At this time, the pressure at the head was 17 MPa, the resin temperature at the die inlet was 240°C, and the pressure at the die resin flow path inlet was 15 MPa.

Production of Composite Resin Particles (C)

In an autoclave equipped with a stirrer having an inner volume of 100 liters, 38 kg of water, 321 g of magnesium pyrophosphate as a dispersant, and 2.0 g of sodium dodecylbenzenesulfonate as a surfactant were added and stirred at a stirring power of $0.20 \text{ kw/m}^3$ to obtain a dispersing medium. 19.8 kg of the seed particles (B) were added and dispersed therein to obtain a suspension (dispersion).

Then, the temperature of the dispersion was adjusted to 60°C, and the stirring power was adjusted to $0.22 \text{ kw/m}^3$.

8.5 kg of styrene previously prepared by dissolving 11.0 g of dicumyl peroxide as a polymerization initiator was added in a fixed amount over 30 minutes. Then, the dispersion was heated at a heating rate of 1.0°C/min, and maintained at 130°C for 1.5 hours, after which the dispersion was cooled to 90°C at a cooling rate of 0.5°C/min.

Then, 11.4 g of sodium dodecylbenzenesulfonate as a surfactant was added to the dispersion. After 10 minutes, 4.2 kg of styrene previously prepared by dissolving 43.9 g (pure content: 75%) of benzoyl peroxide as a polymerization initiator, 3.3 g of t-butyl peroxybenzoate, 168 g of dicumyl peroxide, and 179 g of butyl acrylate was added in a fixed amount over 1.5 hours.

Then, 9.6 kg of styrene was added in a fixed amount to the dispersion over 1.5 hours.

Then, a solution previously prepared by dissolving 16.9 g of magnesium pyrophosphate, 1.0 g of sodium dodecylbenzenesulfonate, and 152 g of ethylenebisstearamide in 2.5 kg of water was added in a fixed amount to the dispersion over 0.5 hours.

Thereafter, the dispersion was heated to 143°C at a heating rate of 1.0°C/min and maintained at the same temperature for 2.5 hours. Thereafter, the dispersion was cooled to 30°C at a cooling rate of 0.94°C/min. The contents were removed from the autoclave, and 400 ml of 20% hydrochloric acid was added to decompose the magnesium pyrophosphate attached to the surface of the resin particles. After washing, the contents were dehydrated in a centrifuge, and water adhering to the surface was removed using an airflow dryer to obtain composite resin particles (C).

Production of Expandable Particles

In an autoclave equipped with a stirrer having an inner volume of 5 liters, 2 kg (100 parts by mass) of the obtained composite resin particles (C), 2 kg of water, and 2.0 g of sodium dodecylbenzenesulfonate (surfactant) were placed. While stirring with a stirring power of 0.20 kw/m$^3$, 350 ml (200 g) of butane (ratio of isobutane to n-butane = 3:7) was injected as a foaming agent. Thereafter, the temperature was raised to 70°C, and stirring was continued for 4 hours. After cooling to room temperature, the contents were removed from the 5 L autoclave, dehydrated, and dried, thereby obtaining expandable particles.

Production of Foam Particles

The obtained expandable particles were placed in a pre-foaming machine equipped with a stirrer having an inner volume of 40 L, and stirred while introducing vapor at a pressure of 0.02 MPa to pre-foam the expandable particles. At this time, the amount of expandable particles added was adjusted, and when the volume reached 10 L, they were removed from the pre-foaming machine, thereby obtaining foam particles with a bulk density of 0.05 g/cm$^3$.

Production of Foam Molded Body

After pre-foaming, the foam particles were stored in a thermostatic chamber at 23°C for 7 days, and then placed in the mold of a foam molding machine (produced by Sekisui Koki Seisakusho KK, model: ACE-3SP). Vapor at a pressure of 0.08 MPa was introduced under the following heating conditions: mold heating for 5 seconds, one-sided heating for 8 seconds, reverse one-sided heating for 2 seconds, and double-sided heating for 18 seconds, to foam the foam particles. Then, water cooling was performed for 10 seconds, followed by vacuum cooling. The foam molded body was removed from the mold when its surface pressure value dropped to 0.02 MPa. At this time, the molding machine started automatic operation. In the automatic operation, the mold starts to close, the foam particles are placed in the mold, heating and cooling are performed under specified conditions, the mold opens at a specified surface pressure value, and the foam molded body is removed. The time from the start of automatic operation to the removal of the foam molded body was defined as the molding cycle (seconds). In this way, a rectangular parallelepiped foam molded body (300 mm in length, 400 mm in width, and 30 mm in thickness) with a density of 0.050 g/cm$^3$ was obtained.

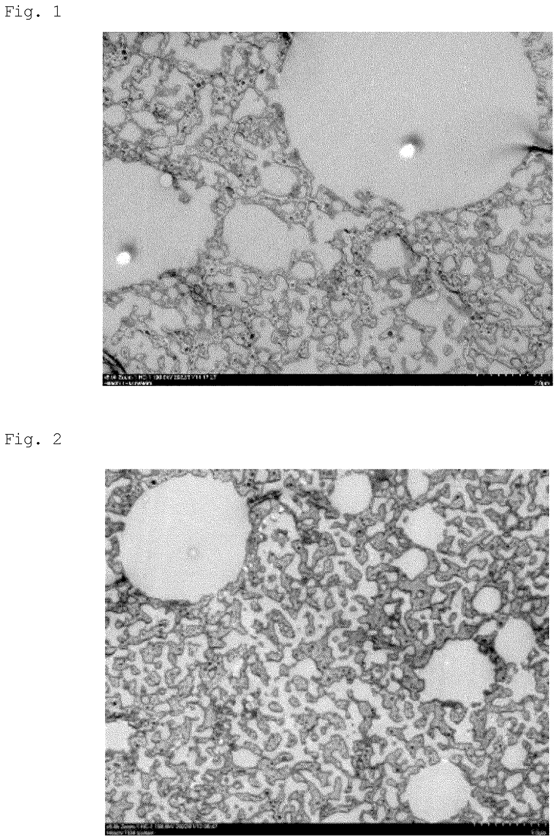

The various physical properties etc. of the obtained seed particles (B), composite resin particles (C), and foam molded body were measured and evaluated. Table 1 shows the results. Further, Fig. 1 shows a TEM image of the composite resin particles (C).

Example 2

Production of Seed Particles (B)

A foam molded body obtained from 67 parts by mass of an ethylene-vinyl acetate copolymer (produced by Tosoh Corporation, product name: Ultrasen 20K51A) and styrene-based monomer-polyolefin seed polymerization composite resin particles was crushed, melt-kneaded, and mixed with 33 parts by mass of pelletized styrene-based monomer-polyolefin seed polymerization composite resin (A) (mass ratio of polyolefin-based resin to polystyrene-based resin = 35:65) for 5 minutes. The resulting resin mixture was melt-kneaded and granulated by an underwater cutting method to obtain seed particles (B).

Production of Composite Resin Particles (C)

In an autoclave equipped with a stirrer having an inner volume of 100 liters, 38 kg of water, 321 g of magnesium pyrophosphate as a dispersant, and 2.0 g of sodium dodecylbenzenesulfonate as a surfactant were added and stirred at a stirring power of 0.20 kw/m$^3$ to obtain a dispersing medium. 16.6 kg of the seed particles (B) were added and dispersed therein to obtain a suspension (dispersion).

Then, the temperature of the dispersion was adjusted to 60°C, and the stirring power was adjusted to 0.22 kw/m$^3$. 7.2 kg of styrene previously prepared by dissolving 9.3 g of dicumyl peroxide as a polymerization initiator was added in a fixed amount over 30 minutes. Then, the dispersion was heated at a heating rate of 1.0°C/min, and maintained at 130°C for 1.5 hours, after which the dispersion was cooled to 90°C at a cooling rate of 0.5°C/min.

Then, 11.4 g of sodium dodecylbenzenesulfonate as a surfactant was added to the dispersion. After 10 minutes, 5.3 kg of styrene previously prepared by dissolving 51.3 g (pure content: 75%) of benzoyl peroxide as a polymerization initiator, 3.8 g of t-butyl peroxybenzoate, 142 g of dicumyl peroxide, and 285 g of butyl acrylate was added in a fixed amount over 1.5 hours.

Then, 8.7 kg of styrene was added in a fixed amount to the dispersion over 1.5 hours.

Then, a solution previously prepared by dissolving 16.9 g of magnesium pyrophosphate, 1.0 g of sodium dodecylbenzenesulfonate, and 114 g of ethylenebisstearamide in 2.5 kg of water was added in a fixed amount to the dispersion over 0.5 hours.

Thereafter, the dispersion was heated to 143°C at a heating rate of 1.0°C/min and maintained at the same temperature for 2.5 hours. Thereafter, the dispersion was cooled to 30°C at a cooling rate of 0.94°C/min. The contents were removed from the autoclave, and 400 ml of 20% hydrochloric acid was added to decompose the magnesium pyrophosphate attached to the surface of the resin particles. After washing, the contents were dehydrated in a centrifuge, and water adhering to the surface was removed using an airflow dryer to obtain composite resin particles (C).

Using the obtained composite resin particles (C), a foam molded body was produced in the same manner as in Example 1. The various physical properties etc. of the obtained seed particles (B), composite resin particles (C), and foam molded body were measured and evaluated. Table 1 shows the results. Further, Fig. 2 shows a TEM image of the composite resin particles (C).

Example 3

Production of Seed Particles (B)

A foam molded body obtained from 76 parts by mass of an ethylene-vinyl acetate copolymer (produced by Tosoh Corporation, product name: Ultrasen 20K51A) and styrene-based monomer-polyolefin seed polymerization composite resin particles was crushed, melt-kneaded, and mixed with 24 parts by mass of pelletized styrene-based monomer-polyolefin seed polymerization composite resin (A) (mass ratio of polyolefin-based resin to polystyrene-based resin = 35:65) for 5 minutes. The resulting resin mixture was melt-kneaded and granulated by an underwater cutting method to obtain seed particles (B).

Production of Composite Resin Particles (C)

In an autoclave equipped with a stirrer having an inner volume of 100 liters, 38 kg of water, 321 g of magnesium pyrophosphate as a dispersant, and 2.0 g of sodium dodecylbenzenesulfonate as a surfactant were added and stirred at a stirring power of 0.20 kw/m$^3$ to obtain a dispersing medium. 15.8 kg of the seed particles (B) were added and dispersed therein to obtain a suspension (dispersion).

Then, the temperature of the dispersion was adjusted to 60°C, and the stirring power was adjusted to 0.22 kw/m$^3$. 6.8 kg of styrene previously prepared by dissolving 8.8 g of dicumyl peroxide as a polymerization initiator was added in a fixed amount over 30 minutes. Then, the dispersion was heated at a heating rate of 1.0°C/min, and maintained at 130°C for 1.5 hours, after which the dispersion was cooled to 90°C at a cooling rate of 0.5°C/min.

Then, 11.4 g of sodium dodecylbenzenesulfonate as a surfactant was added to the dispersion. After 10 minutes, 5.5 kg of styrene previously prepared by dissolving 53.3 g (pure content: 75%) of benzoyl peroxide as a polymerization initiator, 4.0 g of t-butyl peroxybenzoate, 134.4 g of dicumyl peroxide, and 243 g of butyl acrylate was added in a fixed amount over 1.5 hours.

Then, 9.7 kg of styrene was added in a fixed amount to the dispersion over 1.5 hours.

Then, a solution previously prepared by dissolving 16.9 g of magnesium pyrophosphate, 1.0 g of sodium dodecylbenzenesulfonate, and 114 g of ethylenebisstearamide in 2.5 kg of water was added in a fixed amount to the dispersion over 0.5 hours.

Thereafter, the dispersion was heated to 143°C at a heating rate of 1.0°C/min and maintained at the same temperature for 2.5 hours. Thereafter, the dispersion was cooled to 30°C at a cooling rate of 0.94°C/min. The contents were removed from the autoclave, and 400 ml of 20% hydrochloric acid was added to decompose the magnesium pyrophosphate attached to the surface of the resin particles. After washing, the contents were dehydrated in a centrifuge, and water adhering to the surface was removed using an airflow dryer to obtain composite resin particles (C).

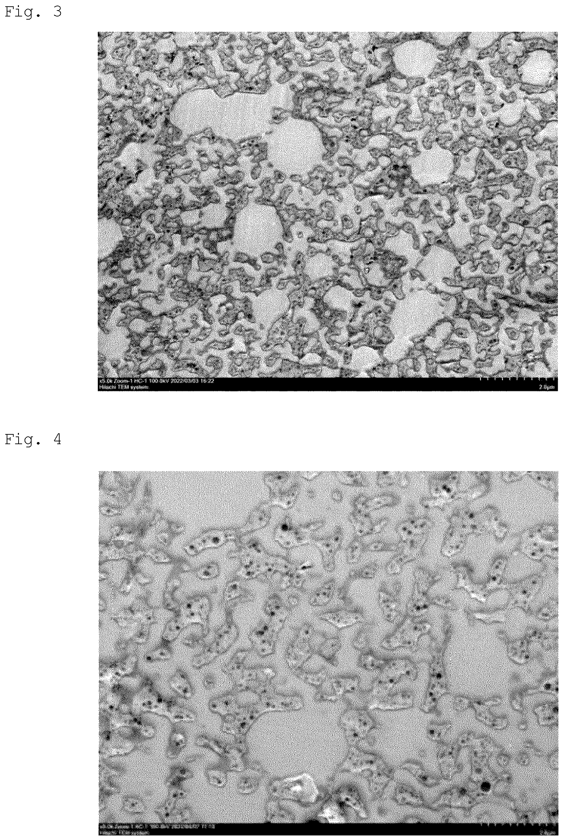

Using the obtained composite resin particles (C), a foam molded body was produced in the same manner as in Example 1. The various physical properties etc. of the obtained seed particles (B), composite resin particles (C), and foam molded body were measured and evaluated. Table 1 shows the results. Further, Fig. 3 shows a TEM image of the composite resin particles.

<u>Example 4</u>

Production of Seed Particles (B)

The amount of the ethylene-vinyl acetate copolymer used was changed to 61 parts by mass, the amount of the seed polymerization composite resin (A) was changed to 13 parts by mass, and 26 parts by mass of recycled low-density polyethylene (LDPE) (Horng En Co., Ltd., product name: LDPE L2040) was further added to the seed polymerization composite resin (A). The resulting resin mixture was melt-kneaded and granulated by an underwater cutting method to obtain seed particles (B).

Production of Composite Resin Particles (C)

In an autoclave equipped with a stirrer having an inner volume of 100 liters, 38 kg of water, 321 g of magnesium pyrophosphate as a dispersant, and 2.0 g of sodium dodecylbenzenesulfonate as a surfactant were added and stirred at a stirring power of 0.20 kw/m$^3$ to obtain a dispersing medium. 14.6 kg of the seed particles (B) were added and dispersed therein to obtain a suspension (dispersion).

Then, the temperature of the dispersion was adjusted to 60°C, and the stirring power was adjusted to 0.22 kw/m$^3$. 6.3 kg of styrene previously prepared by dissolving 8.2 g of dicumyl peroxide as a polymerization initiator was added in a fixed amount over 30 minutes. Then, the dispersion was heated at a heating rate of 1.0°C/min, and maintained at 130°C for 1.5 hours, after which the dispersion was cooled to 90°C at a cooling rate of 0.5°C/min.

Then, 11.4 g of sodium dodecylbenzenesulfonate as a surfactant was added to the dispersion. After 10 minutes, 5.8 kg of styrene previously prepared by dissolving 56.2 g (pure content: 75%) of benzoyl peroxide as a polymerization initiator, 4.2 g of t-butyl peroxybenzoate, 124.0 g of dicumyl peroxide, and 264 g of butyl acrylate was added in a fixed amount over 1.5 hours.

Then, 11.1 kg of styrene was added in a fixed amount to the dispersion over 1.5 hours.

Then, a solution previously prepared by dissolving 16.9 g of magnesium pyrophosphate, 1.0 g of sodium dodecylbenzenesulfonate, and 114 g of ethylenebisstearamide in 2.5 kg of water was added in a fixed amount to the dispersion over 0.5 hours.

Thereafter, the dispersion was heated to 143°C at a heating rate of 1.0°C/min and maintained at the same temperature for 2.5 hours. Thereafter, the dispersion was cooled to 30°C at a cooling rate of 0.94°C/min. The contents were removed from the autoclave, and 400 ml of 20% hydrochloric acid was added to decompose the magnesium pyrophosphate attached to the surface of the resin particles. After washing, the contents were dehydrated in a centrifuge, and water adhering to the surface was removed using an airflow dryer to obtain composite resin particles (C).

Using the obtained composite resin particles (C), a foam molded body was produced in the same manner as in Example 1. The various physical properties etc. of the obtained seed particles (B), composite resin particles (C), and foam molded body were measured and evaluated. Table 1 shows the results. Further, Fig. 4 shows a TEM image of the composite resin particles (C).

<u>Example 5</u>

Production of Seed Particles (B)

A foam molded body obtained from 49 parts by mass of an ethylene-vinyl acetate copolymer (produced by Tosoh Corporation, product name: Ultrasen 20K51A) and styrene-based monomer-polyolefin seed polymerization composite resin particles was crushed, melt-kneaded, and mixed with 51 parts by mass of pelletized styrene-based monomer-polyolefin seed polymerization composite resin (A) (mass ratio of polyolefin-based resin to polystyrene-based resin = 40:60) for 5 minutes. The resulting resin mixture was melt-kneaded and granulated by an underwater cutting method to obtain seed particles (B).

Production of Composite Resin Particles (C)

In an autoclave equipped with a stirrer having an inner volume of 100 liters, 38 kg of water, 321 g of magnesium pyrophosphate as a dispersant, and 2.0 g of sodium dodecylbenzenesulfonate as a surfactant were added and stirred at a stirring power of 0.20 kw/m$^3$ to obtain a dispersing medium. 11.1 kg of the seed particles (B) were added and dispersed therein to obtain a suspension (dispersion).

Then, the temperature of the dispersion was adjusted to 60°C, and the stirring power was adjusted to 0.22 kw/m$^3$. 4.8 kg of styrene previously prepared by dissolving 6.2 g of dicumyl peroxide as a polymerization initiator was added in a fixed amount over 30 minutes. Then, the dispersion was heated at a heating rate of 1.0°C/min, and maintained at 130°C for 1.5 hours, after which the dispersion was cooled to 90°C at a cooling rate of 0.5°C/min.

Then, 11.4 g of sodium dodecylbenzenesulfonate as a surfactant was added to the dispersion. After 10 minutes, 6.7 kg of styrene previously prepared by dissolving 64.5 g (pure content: 75%) of benzoyl peroxide as a polymerization initiator, 4.8 g of t-butyl peroxybenzoate, 94.6 g of dicumyl peroxide, and 285 g of butyl acrylate was added in a fixed amount over 1.5 hours.

Then, 15.2 kg of styrene was added in a fixed amount to the dispersion over 1.5 hours.

Then, a solution previously prepared by dissolving 16.9 g of magnesium pyrophosphate, 1.0 g of sodium dodecylbenzenesulfonate, and 114 g of ethylenebisstearamide in 2.5 kg of water was added in a fixed amount to the dispersion over 0.5 hours.

Thereafter, the dispersion was heated to 143°C at a heating rate of 1.0°C/min and maintained at the same temperature for 2.5 hours. Thereafter, the dispersion was cooled to 30°C at a cooling rate of 0.94°C/min. The contents were removed from the autoclave, and 400 ml of 20% hydrochloric acid was added to decompose the magnesium pyrophosphate attached to the surface of the resin particles. After washing, the contents were dehydrated in a centrifuge, and water adhering to the surface was removed using an airflow dryer to obtain composite resin particles (C).

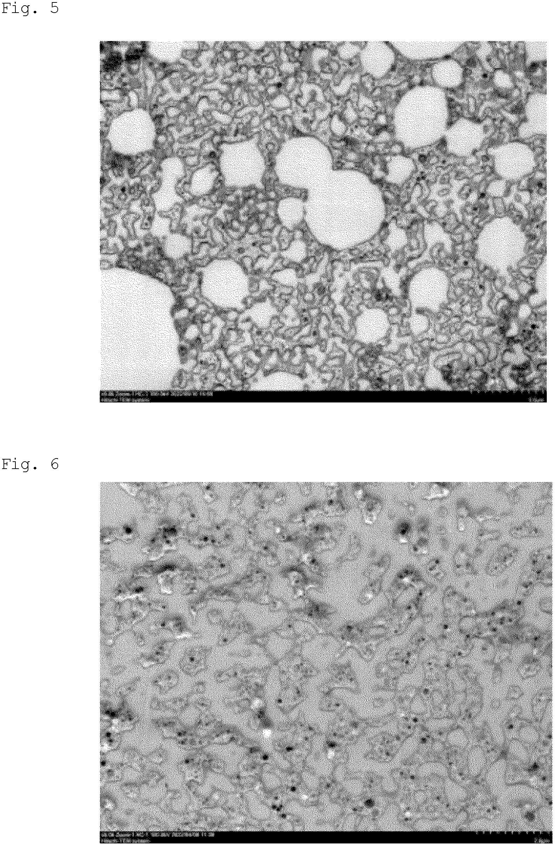

Using the obtained composite resin particles (C), a foam molded body was produced in the same manner as in Example 1. The various physical properties etc. of the obtained seed particles (B), composite resin particles (C), and foam molded body were measured and evaluated. Table 1 shows the results. Further, Fig. 5 shows a TEM image of the composite resin particles (C).

Comparative Example 1

Production of Seed Particles

Without using the seed polymerization composite resin (A), only an ethylene-vinyl acetate copolymer (produced by Tosoh Corporation, product name: Ultrasen 20K51A) was used as a polyolefin-based resin, and granulated by an underwater cutting method to obtain seed particles.

Production of Composite Resin Particles

In an autoclave equipped with a stirrer having an inner volume of 100 liters, 38 kg of water, 321 g of magnesium pyrophosphate as a dispersant, and 2.0 g of sodium dodecylbenzenesulfonate as a surfactant were added and stirred at a stirring power of 0.20 kw/m$^3$ to obtain a dispersing medium. 13.3 kg of the seed particles were added and dispersed therein to obtain a suspension (dispersion).

Then, the temperature of the dispersion was adjusted to 60°C, and the stirring power was adjusted to 0.22 kw/m$^3$. 5.7 kg of styrene previously prepared by dissolving 7.4 g of dicumyl peroxide as a polymerization initiator was added in a fixed amount over 30 minutes. Then, the dispersion was heated at a heating rate of 1.0°C/min, and maintained at 130°C for 1.5 hours, after which the dispersion was cooled to 90°C at a cooling rate of 0.5°C/min.

Then, 11.4 g of sodium dodecylbenzenesulfonate as a surfactant was added to the dispersion. After 10 minutes, 6.1 kg of styrene previously prepared by dissolving 59.3 g (pure content: 75%) of benzoyl peroxide as a polymerization initiator, 4.4 g of t-butyl peroxybenzoate, 113.1 g of dicumyl peroxide, and 285 g of butyl acrylate was added in a fixed amount over 1.5 hours.

Then, 12.6 kg of styrene was added in a fixed amount to the dispersion over 1.5 hours.

Then, a solution previously prepared by dissolving 16.9 g of magnesium pyrophosphate, 1.0 g of sodium dodecylbenzenesulfonate, and 114 g of ethylenebisstearamide in 2.5 kg of water was added in a fixed amount to the dispersion over 0.5 hours.

Thereafter, the dispersion was heated to 143°C at a heating rate of 1.0°C/min and maintained at the same temperature for 2.5 hours. Thereafter, the dispersion was cooled to 30°C at a cooling rate of 0.94°C/min. The contents were removed from the autoclave, and 400 ml of 20% hydrochloric acid was added to decompose the magnesium pyrophosphate attached to the surface of the resin particles. After washing, the contents were dehydrated in a centrifuge, and water adhering to the surface was removed using an airflow dryer to obtain composite resin particles.

Using the obtained composite resin particles, a foam molded body was produced in the same manner as in Example 1. The various physical properties etc. of the obtained seed particles, composite resin particles, and foam molded body were measured and evaluated. Table 2 shows the results. Further, Fig. 6 shows a TEM image of the composite resin particles.

Comparative Example 2

Production of Seed Particles

Without using the seed polymerization composite resin (A), only an ethylene-vinyl acetate copolymer (produced by Tosoh Corporation, product name: Ultrasen 20K51A) was used as a polyolefin-based resin, and granulated by an underwater cutting method to obtain seed particles.

Production of Composite Resin Particles

In an autoclave equipped with a stirrer having an inner volume of 100 liters, 38 kg of water, 321 g of magnesium pyrophosphate as a dispersant, and 2.0 g of sodium dodecylbenzenesulfonate as a surfactant were added and stirred at a stirring power of 0.20 kw/m$^3$ to obtain a dispersing medium. 11.4 kg of the seed particles were added and dispersed therein to obtain a suspension (dispersion).

Then, the temperature of the dispersion was adjusted to 60°C, and the stirring power was adjusted to 0.22 kw/m$^3$. 4.9 kg of styrene previously prepared by dissolving 6.4 g of dicumyl peroxide as a polymerization initiator was added in a fixed amount over 30 minutes. Then, the dispersion was heated at a heating rate of 1.0°C/min, and maintained at 130°C for 1.5 hours, after which the dispersion was cooled to 120°C at a cooling rate 0.5°C/min.

Then, 11.4 g of sodium dodecylbenzenesulfonate as a surfactant was added to the dispersion. After 10 minutes, 6.6 kg of styrene previously prepared by dissolving 114.0 g of dicumyl peroxide as a polymerization initiator and 285 g of butyl acrylate was added in a fixed amount over 1.5 hours.

Then, 14.8 kg of styrene was added in a fixed amount to the dispersion over 1.5 hours.

Then, a solution previously prepared by dissolving 16.9 g of magnesium pyrophosphate, 1.0 g of sodium dodecylbenzenesulfonate, and 114 g of ethylenebisstearamide in 2.5 kg of water was added in a fixed amount to the dispersion over 0.5 hours.

Thereafter, the dispersion was heated to 143°C at a heating rate of 1.0°C/min and maintained at the same temperature for 2.5 hours. Thereafter, the dispersion was cooled to 30°C at a cooling rate of 0.94°C/min. The contents were removed from the autoclave, and 400 ml of 20% hydrochloric acid was added to decompose the magnesium pyrophosphate attached to the surface of the resin particles. After washing, the contents were dehydrated in a centrifuge, and water adhering to the surface was removed using an airflow dryer to obtain composite resin particles.

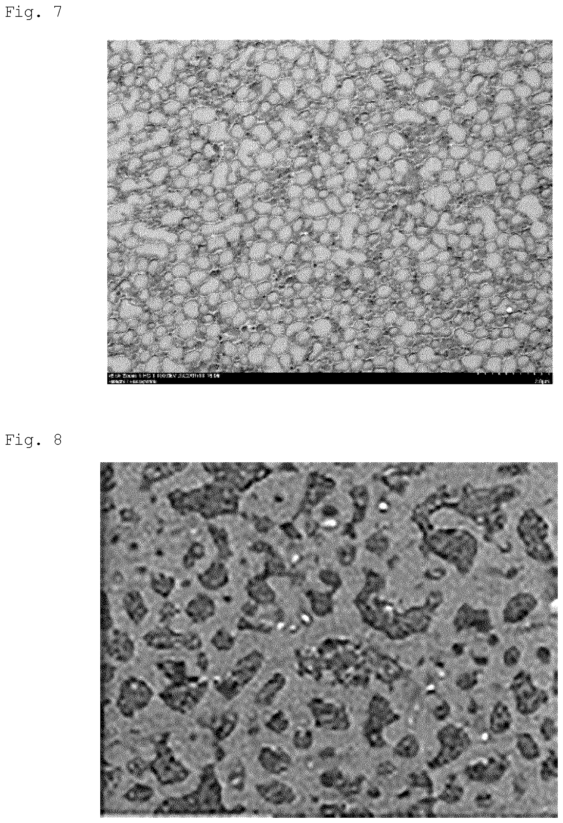

Using the obtained composite resin particles, composite resin particles in which the content mass ratio of the polyolefin-based resin and the polystyrene-based resin was 30:70, and a foam molded body were produced in the same manner as in Example 1. The various physical properties etc. of the obtained seed particles, composite resin particles, and foam molded body were measured and evaluated. Table 2 shows the results. Further, Fig. 7 shows a TEM image of the composite resin particles.

Comparative Example 3

Production of Seed Particles

Seed particles were obtained in the same manner as in Example 1, except that 90 parts by mass of an ethylene-vinyl acetate copolymer (produced by Japan Polyethylene Corporation, product name: Novatec EVA LV-115) and 10 parts by mass of polystyrene-based resin (produced by Toyo Styrene Co., Ltd., product name: Toyo Styrol GP HRM-26) were mixed for 5 minutes to obtain a resin mixture.

Production of Composite Resin Particles

In an autoclave equipped with a stirrer having an inner volume of 100 liters, 40 kg of water, 356 g of magnesium pyrophosphate as a dispersant, and 7.0 g of sodium dodecylbenzenesulfonate as a surfactant were added and stirred at a stirring power of 0.20 kw/m$^3$ to obtain a dispersing medium. 8.8 kg of the seed particles were added and dispersed therein to obtain a suspension (dispersion).

Then, the temperature of the dispersion was adjusted to 60°C, and the stirring power was adjusted to 0.22 kw/m$^3$. 3.8 kg of styrene previously prepared by dissolving 4.6 g of dicumyl peroxide as a polymerization initiator was added in a fixed amount over 30 minutes. Thereafter, the stirring power was adjusted to 0.22 kw/m$^3$, and the seed particles were impregnated with styrene by stirring for 1 hour while maintaining the temperature of the dispersion at 60°C. Then, the dispersion was heated at a heating rate of 0.78°C/min and maintained at 130°C for 2 hours. Next, the temperature was raised to 140°C at 0.5°C/min, and annealing was performed for 2 hours, after which the dispersion was cooled to 90°C at a cooling rate of 0.5°C/min.

Then, 11.5 g of sodium dodecylbenzenesulfonate as a surfactant was added to the dispersion. After 10 minutes, 8.9 kg of styrene previously prepared by dissolving 67 g (pure content: 75%) of benzoyl peroxide as a polymerization initiator, 6.2 g of t-butyl peroxybenzoate, 64 g of dicumyl peroxide, and 200 g of butyl acrylate was added in a fixed amount over 3 hours.

Then, 17.9 kg of styrene previously prepared by dissolving 400 g of butyl acrylate and 200 g of ethylenebisstearamide was added in a fixed amount to the dispersion over 3 hours.

Thereafter, the dispersion was heated to 143°C at a heating rate of 1.0°C/min and maintained at the same temperature for 2.5 hours. Thereafter, the dispersion was cooled to 30°C at a cooling rate of 0.94°C/min. The contents were removed from the autoclave, and 400 ml of 20% hydrochloric acid was added to decompose the magnesium pyrophosphate attached to the surface of the resin particles. After washing, the contents were dehydrated in a centrifuge, and water adhering to the surface was removed using an airflow dryer to obtain composite resin particles in which the content mass ratio of the polyolefin-based resin and the polystyrene-based resin was 20:80.

Using the obtained composite resin particles, expandable particles, foam particles, and a foam molded body were produced in the same manner as in Example 1. The various physical properties etc. of the obtained seed particles, composite resin particles, and foam molded body were measured and evaluated. Table 2 shows the results. Further, Fig. 8 shows a TEM image of the composite resin particles.

Comparative Example 4

Production of Seed Particles

Seed particles were obtained in the same manner as in Example 1, except that 90 parts by mass of an ethylene-vinyl acetate copolymer (produced by Japan Polyethylene Corporation, product name: Novatec EVA LV-115) and 10 parts by mass of polystyrene-based resin (produced by Toyo Styrene Co., Ltd., product name: Toyo Styrol GP HRM-26) were mixed for 5 minutes to obtain a resin mixture.

Production of Composite Resin Particles

In an autoclave equipped with a stirrer having an inner volume of 100 liters, 40 kg of water, 356 g of magnesium pyrophosphate as a dispersant, and 7.0 g of sodium dodecylbenzenesulfonate as a surfactant were added and stirred at a stirring power of 0.20 kw/m$^3$ to obtain a dispersing medium. 13.3 kg of the seed particles were added and dispersed therein to obtain a suspension (dispersion).

Then, the temperature of the dispersion was adjusted to 60°C, and the stirring power was adjusted to 0.22 kw/m$^3$. 5.7 kg of styrene previously prepared by dissolving 6.2 g of dicumyl peroxide as a polymerization initiator was added in a fixed amount over 30 minutes. Thereafter, the stirring power was adjusted to 0.22 kw/m$^3$, and the seed particles were impregnated with styrene by stirring for 1 hour while maintaining the temperature of the dispersion at 60°C. Then, the dispersion was heated at a heating rate of 0.78°C/min and maintained at 130°C for 2 hours. Next, the temperature was raised to 140°C at 0.5°C/min, after which the dispersion was cooled to 90°C at a cooling rate of 0.5°C/min.

Then, 11.5 g of sodium dodecylbenzenesulfonate as a surfactant was added to the dispersion. After 10 minutes, 6.1 kg of styrene previously prepared by dissolving 60 g (pure content: 75%) of benzoyl peroxide as a polymerization initiator, 5.6 g of t-butyl peroxybenzoate, 107 g of dicumyl peroxide, and 200 g of butyl acrylate was added in a fixed amount over 2 hours.

Then, 14.3 kg of styrene previously prepared by dissolving 400 g of butyl acrylate and 200 g of ethylenebisstearamide was added in a fixed amount to the dispersion over 2 hours.

Then, the dispersion was maintained at 90°C for 1 hour, heated to 143°C at a heating rate of 0.66°C/min, and maintained at that temperature for 2 hours. The dispersion was then cooled to 30°C at a cooling rate of 0.94°C/min.

Thereafter, the dispersion was heated to 143°C at a heating rate of 1.0°C/min and maintained at the same temperature for 2.5 hours. Thereafter, the dispersion was cooled to 30°C at a cooling rate of 0.94°C/min. The contents were removed from the autoclave, and 400 ml of 20% hydrochloric acid was added to decompose the magnesium pyrophosphate attached to the surface of the resin particles. After washing, the contents were dehydrated in a centrifuge, and water adhering to the surface was removed using an airflow dryer to obtain composite resin particles in which the content mass ratio of the polyolefin-based resin and the polystyrene-based resin was 30:70.

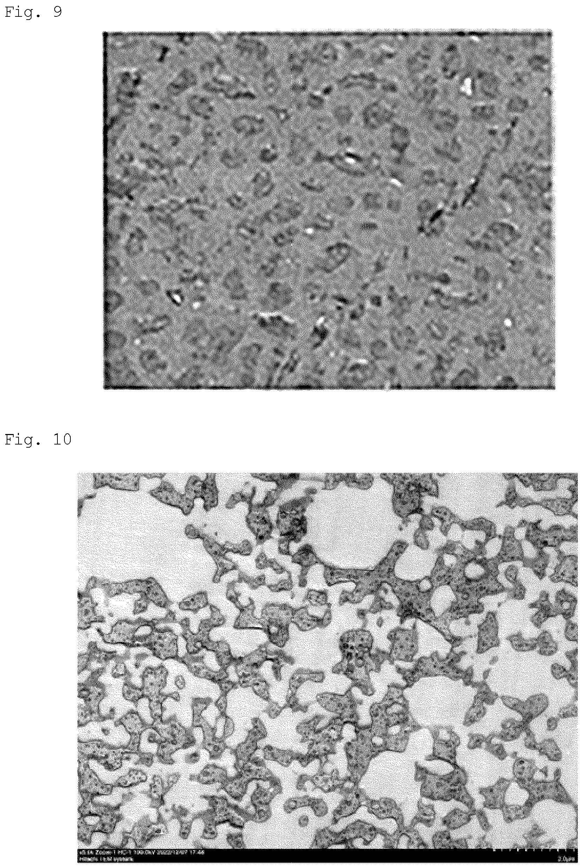

Using the obtained composite resin particles, a foam molded body was produced in the same manner as in Comparative Example 3, except that the annealing step was not performed. The various physical properties etc. of the obtained seed particles, composite resin particles, and foam molded body were measured and evaluated. Table 2 shows the results. Further, Fig. 9 shows a TEM image of the composite resin particles.


Example 6

Production of Seed Particles (B)

A foam molded body obtained from 63 parts by mass of an ethylene-vinyl acetate copolymer (produced by Tosoh Corporation, product name: Ultrasen 20K51A) and styrene-based monomer-polyolefin seed polymerization composite resin particles was crushed, melt-kneaded, and mixed with 37 parts by mass of pelletized styrene-based monomer-polyolefin seed polymerization composite resin (A) (mass ratio of polyolefin-based resin to polystyrene-based resin = 30:70) for 5 minutes. The resulting resin mixture was melt-kneaded and granulated by an underwater cutting method to obtain seed particles (B).

Production of Composite Resin Particles (C)

In an autoclave equipped with a stirrer having an inner volume of 100 liters, 39 kg of water, 373 g of magnesium pyrophosphate as a dispersant, and 6.3 g of sodium dodecylbenzenesulfonate as a surfactant were added and stirred at a stirring power of $0.20 \, kw/m^3$ to obtain a dispersing medium. 24.9 kg of the seed particles (B) were added and dispersed therein to obtain a suspension (dispersion).

Then, the temperature of the dispersion was adjusted to 65°C, and the stirring power was adjusted to $0.22 \, kw/m^3$. 4.2 kg of styrene previously prepared by dissolving 5.5 g of dicumyl peroxide as a polymerization initiator was added in a fixed amount over 30 minutes. Then, the dispersion was heated at a heating rate of 1.0°C/min, and maintained at 130°C for 1.5 hours, after which the dispersion was cooled to 90°C at a cooling rate of 0.5°C/min.

Then, 47.1 g of sodium dodecylbenzenesulfonate as a surfactant was added to the dispersion. After 10 minutes, 2.7 kg of styrene previously prepared by dissolving 26.5 g (pure content: 75%) of benzoyl peroxide as a polymerization initiator, 2.5 g of t-butyl peroxybenzoate, 249 g of dicumyl peroxide, and 732 g of butyl acrylate was added in a fixed amount over 1.5 hours.

Then, 4.7 kg of styrene was added in a fixed amount to the dispersion over 1.5 hours.

Then, a solution previously prepared by dissolving 45.5 g of magnesium pyrophosphate, 8.0 g of sodium dodecylbenzenesulfonate, and 146 g of ethylenebisstearamide in 2.5 kg of water was added in a fixed amount to the dispersion over 0.5 hours.

Thereafter, the dispersion was heated to 143°C at a heating rate of 1.0°C/min and maintained at the same temperature for 2.5 hours. Thereafter, the dispersion was cooled to 30°C at a cooling rate of 0.94°C/min. The contents were removed from the autoclave, and 500 ml of 20% hydrochloric acid was added to decompose the magnesium pyrophosphate attached to the surface of the resin particles. After washing, the contents were dehydrated in a centrifuge, and water adhering to the surface was removed using an airflow dryer to obtain composite resin particles (C).

Using the obtained composite resin particles (C), a foam molded body was produced in the same manner as in Example 1. The various physical properties etc. of the obtained seed particles (B), composite resin particles (C), and foam molded body were measured and evaluated. Table 1 shows the results. Further, Fig. 10 shows a TEM image of the composite resin particles (C).


Example 7

Production of Seed Particles (B)

A foam molded body obtained from 22 parts by mass of an ethylene-vinyl acetate copolymer (produced by Tosoh Corporation, product name: Ultrasen 20K51A) and styrene-based monomer-polyolefin seed polymerization composite resin particles was crushed, melt-kneaded, and mixed with 78 parts by mass of pelletized styrene-based monomer-polyolefin seed polymerization composite resin (A) (mass ratio of polyolefin-based resin to polystyrene-based resin = 38:62) for 5 minutes. The resulting resin mixture was melt-kneaded and granulated by an underwater cutting method to obtain seed particles (B).

Production of Composite Resin Particles (C)

In an autoclave equipped with a stirrer having an inner volume of 100 liters, 39 kg of water, 373 g of magnesium pyrophosphate as a dispersant, and 6.3 g of sodium dodecylbenzenesulfonate as a surfactant were added and stirred at a stirring power of 0.20 kw/m$^3$ to obtain a dispersing medium. 7.1 kg of the seed particles (B) were added and dispersed therein to obtain a suspension (dispersion).

Then, the temperature of the dispersion was adjusted to 65°C, and the stirring power was adjusted to 0.22 kw/m$^3$. 3.0 kg of styrene previously prepared by dissolving 3.9 g of dicumyl peroxide as a polymerization initiator was added in a fixed amount over 30 minutes. Then, the dispersion was heated at a heating rate of 1.0°C/min, and maintained at 130°C for 1.5 hours, after which the dispersion was cooled to 90°C at a cooling rate of 0.5°C/min.

Then, 47.1 g of sodium dodecylbenzenesulfonate as a surfactant was added to the dispersion. After 10 minutes, 6.7 kg of styrene previously prepared by dissolving 63.0 g (pure content: 75%) of benzoyl peroxide as a polymerization initiator, 5.9 g of t-butyl peroxybenzoate, 71 g of dicumyl peroxide, and 732 g of butyl acrylate was added in a fixed amount over 1.5 hours.

Then, 19 kg of styrene was added in a fixed amount to the dispersion over 1.5 hours.

Then, a solution previously prepared by dissolving 45.5 g of magnesium pyrophosphate, 8.0 g of sodium dodecylbenzenesulfonate, and 146 g of ethylenebisstearamide in 2.5 kg of water was added in a fixed amount to the dispersion over 0.5 hours.

Thereafter, the dispersion was heated to 143°C at a heating rate of 1.0°C/min and maintained at the same temperature for 2.5 hours. Thereafter, the dispersion was cooled to 30°C at a cooling rate of 0.94°C/min. The contents were removed from the autoclave, and 500 ml of 20% hydrochloric acid was added to decompose the magnesium pyrophosphate attached to the surface of the resin particles. After washing, the contents were dehydrated in a centrifuge, and water adhering to the surface was removed using an airflow dryer to obtain composite resin particles (C).

Using the obtained composite resin particles (C), a foam molded body was produced in the same manner as in Example 1. The various physical properties etc. of the obtained seed particles (B), composite resin particles (C), and foam molded body were measured and evaluated. Table 1 shows the results. Further, Fig. 11 shows a TEM image of the composite resin particles (C).

Table 1

| | | Ex. 1 | Ex. 2 | Ex. 3 | Ex. 4 | Ex. 5 | Ex. 6 | Ex. 7 |
|---|---|---|---|---|---|---|---|---|
| Seed particles (B) | PO/PS in seed polymerization composite resin (A) (mass ratio) | 35/65 | 35/65 | 35/65 | 35/65 | 40/60 | 30/70 | 38/62 |
| | PO/seed polymerization composite resin (A) (mass ratio) | 46/54 | 67/33 | 76/24 | 87/13 | 49/51 | 63/37 | 22/78 |
| | PO/PS (mass ratio) | 65/35 | 79/21 | 84/16 | 91/9 | 68/32 | 74/26 | 52/48 |
| | Gel fraction (mass%) | 6.0 | 3.0 | 2.0 | 1.8 | 3.2 | 2.5 | 4.3 |

(continued)

| | | Ex. 1 | Ex. 2 | Ex. 3 | Ex. 4 | Ex. 5 | Ex. 6 | Ex. 7 |
|---|---|---|---|---|---|---|---|---|
| Composite resin particles | Seed particles (B)/ styrene (mass ratio) | 54/46 | 44/56 | 42/58 | 38/62 | 29/71 | 68/32 | 19/81 |
| | POPS in composite resin particle (C) (mass ratio) | 35/65 | 35/65 | 35/65 | 35/65 | 20/80 | 50/50 | 10/90 |
| | PS fine particles with particle size of 1.0 $\mu$m or more | Present | Present | Present | Present | Present | Present | Present |
| | Area of PS fine particles with particle size of 1.0 $\mu$m or more (%) | 43.9 | 15.4 | 7.9 | 15.7 | 19.4 | 11.5 | 6.2 |
| | Gel fraction (mass%) | 19.4 | 28.2 | 26.2 | 18.2 | 19.0 | 24.3 | 18.3 |
| | PO/PS bicontinuous structure | Present | Present | Present | Present | Present | Present | Present |
| | Annealing step (time) | 0 | 0 | 0 | 0 | 0 | 0 | 0 |
| Foam molded body | Density (g/cm$^3$) | 0.050 | 0.050 | 0.050 | 0.050 | 0.050 | 0.050 | 0.050 |
| | Chemical resistance | A | A | A | A | A | A | A |
| | Molding cycle (sec) | 153 | 157 | 163 | 165 | 163 | 129 | 166 |
| | Fusion rate (%) | 90 | 90 | 90 | 90 | 90 | 90 | 90 |
| | Appearance | 5 | 5 | 5 | 5 | 5 | 5 | 5 |
| | 25% compression strength (MPa) | 0.318 | 0.320 | 0.344 | 0.366 | 0.334 | 0.323 | 0.374 |
| | Bending strength (MPa) | 0.636 | 0.722 | 0.743 | 0.788 | 0.643 | 0.773 | 0.743 |
| | Bending modulus (N/mm$^2$) | 13.7 | 13.5 | 14.5 | 16.3 | 15.5 | 13.5 | 17.5 |

Table 2

| | | Comp. Ex. 1 | Comp. Ex. 2 | Comp. Ex. 3 | Comp. Ex. 4 |
|---|---|---|---|---|---|
| Seed particles (B) | PO/PS in seed polymerization composite resin (A) (mass ratio) | - | - | - | - |
| | PO/seed polymerization composite resin (A) (mass ratio) | - | - | - | - |
| | PO/PS (mass ratio) | 100 | 100 | 90/10 | 90/10 |
| | Gel fraction (mass%) | - | - | 0.20 | 0.20 |

(continued)

| | | Comp. Ex. 1 | Comp. Ex. 2 | Comp. Ex. 3 | Comp. Ex. 4 |
|---|---|---|---|---|---|
| Composite resin particles | Seed particles (B)/styrene (mass ratio) | 35/65 | 30/70 | 22/78 | 33/67 |
| | PO/PS in composite resin particle (C) (mass ratio) | 35/65 | 30/70 | 20/80 | 30/70 |
| | PS fine particles with particle size of 1.0 $\mu$m or more | Absent | Absent | Absent | Absent |
| | Area of PS fine particles with particle size of 1.0 $\mu$m or more (%) | - | - | - | |
| | Gel fraction (mass%) | 20.4 | 13.5 | 21.0 | 19.0 |
| | POPS bicontinuous structure | Present | Absent | Present | Present |
| | Annealing step (time) | 0 | 0 | 2 | 0 |
| Foam molded body | Density (g/cm$^3$) | 0.050 | 0.050 | 0.050 | 0.050 |
| | Chemical resistance | A | A | A | A |
| | Molding cycle (sec) | 194 | 163 | 165 | 162 |
| | Fusion rate (%) | 90 | 90 | 90 | 90 |
| | Appearance | 5 | 5 | 5 | 4 |
| | 25% compression strength (MPa) | 0.332 | 0.233 | 0.322 | 0.310 |
| | Bending strength (MPa) | 0.767 | 0.543 | 0.721 | 0.554 |
| | Bending modulus (N/mm$^2$) | 15.9 | 11.8 | 12.5 | 11.1 |

From the TEM images of the center of the composite resin particles of Examples 1 to 7 (Figs. 1 to 5, 10, and 11), a bicontinuous structure of the polyethylene-based resin and the polystyrene-based resin, and one or more polystyrene-based resin fine particles having a particle size of 1.0 $\mu$m or more were observed. The area ratios of the polystyrene-based resin fine particles having a particle size of 1.0 $\mu$m or more were 43.9%, 15.4%, 7.9%, 15.7%, 19.4%, 11.5%, and 6.2%, respectively. The foam molded bodies of Examples 1 to 7 showed excellent results in chemical resistance, molding cycle, fusion rate, appearance, 25% compression strength, bending strength, and bending modulus.

In the composite resin particles of Comparative Example 1 to 4, the presence of polystyrene-based resin fine particles having a particle size of 1.0 $\mu$m or more could not be confirmed in the particle center (Figs. 6 to 9).

The molding cycle of the foam molded body of Comparative Example 1 was 27% longer than that of the foam molded body of Example 1.

In the composite resin particles of Comparative Example 2, the presence of a bicontinuous structure of the polyethylene-based resin and the polystyrene-based resin could not be confirmed. The strength of the foam molded body of Comparative Example 2 was clearly low.

In Comparative Example 3, an annealing step was performed; however, the foam molded body had low bending modulus.

The foam molded body of Comparative Example 4 was inferior in appearance, and had low bending strength and bending modulus.

**Claims**

1. Polystyrene-based composite resin particles (C) for producing a foam molded body, the composite resin particles (C) comprising a polyolefin-based resin and a polystyrene-based resin at a mass ratio of 10:90 to 50:50, wherein in an image of the composite resin particles (C) obtained by the following method,

(1) a bicontinuous structure of the polyolefin-based resin and the polystyrene-based resin is observed,
(2) one or more polystyrene-based resin fine particles having a particle size of 1.0 $\mu$m or more are observed, and
(3) the area ratio of the polystyrene-based resin fine particles having a particle size of 1.0 $\mu$m or more is 1 to 50%.
Image acquisition method:

The composite resin particles (C) are each sliced along a line passing through the center of the particle, and the resulting thin film is photographed with a transmission electron microscope to obtain an image of a square area having sides of 10 $\mu$m and including the center of the particle.

2. The polystyrene-based composite resin particles (C) according to claim 1, wherein the composite resin particles (C) are seed polymerization composite resin particles of styrene-based monomer-seed particles (B),

the seed particles (B) comprise a styrene-based monomer-polyolefin seed polymerization composite resin (A), which has been melt-kneaded at least once, in an amount of 10 to 80 mass% of the seed particles (B), and the seed particles (B) further comprise, in addition to a polyolefin-based resin contained in the seed polymerization composite resin (A), a polyolefin-based resin in an amount of 20 to 90 mass% of the seed particles (B).

3. Expandable particles comprising the composite resin particles (C) according to claim 1 or 2, and a foaming agent.

4. Foam particles of the expandable particles according to claim 3.

5. The foam particles according to claim 4, which have a bulk density of 0.012 to 0.20 g/cm$^3$.

6. A foam molded body of the foam particles according to claim 4.

7. A method for producing composite resin particles (C) for producing a foam molded body, the composite resin particles (C) comprising a polyolefin-based resin and a polystyrene-based resin,

the method comprising impregnating and polymerizing seed particles (B) with a styrene-based monomer to obtain the composite resin particles (C),
wherein the seed particles (B) comprise a styrene-based monomer-polyolefin seed polymerization composite resin (A), which has been melt-kneaded at least once, and
the seed particles (B) further comprise, in addition to a polyolefin-based resin contained in the seed polymerization composite resin (A), a polyolefin-based resin in an amount of 20 to 90 mass% of the seed particles (B).

8. The method for producing composite resin particles (C) according to claim 7, wherein the seed particles (B) comprise the styrene-based monomer-polyolefin seed polymerization composite resin (A), which has been melt-kneaded at least once, in an amount of 10 to 80 mass% of the seed particles (B).

Fig. 1

Fig. 2

Fig. 3

Fig. 4

Fig. 5

Fig. 6

Fig. 7

Fig. 8

Fig. 9

Fig. 10

Fig. 11

Fig. 12

Observed range

10 × 10 μm

Reference circle

R=0.5 μm

## INTERNATIONAL SEARCH REPORT

International application No.

**PCT/JP2023/021685**

| A. | CLASSIFICATION OF SUBJECT MATTER |
| | |

*C08J 9/18*(2006.01)i; *C08L 23/00*(2006.01)i; *C08L 25/04*(2006.01)i
FI:    C08J9/18 CET; C08L23/00; C08L25/04

According to International Patent Classification (IPC) or to both national classification and IPC

| B. | FIELDS SEARCHED |
| | |

Minimum documentation searched (classification system followed by classification symbols)

B29C44/00-44/60; B29C67/20; C08J9/00-9/43; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| | |

| Category* | Citation of document, with indication, where appropriate, of the relevant passages | Relevant to claim No. |
|---|---|---|
| A | WO 2016/047382 A1 (SEKISUI PLASTICS CO., LTD.) 31 March 2016 (2016-03-31)<br>claims 1-4, paragraphs [0018]-[0021], examples | 1-8 |
| A | JP 2016-190991 A (SEKISUI PLASTICS CO., LTD.) 10 November 2016 (2016-11-10)<br>claims 3, 5, 8-9, paragraph [0025], examples | 1-8 |
| A | WO 2004/085527 A1 (SEKISUI PLASTICS CO., LTD.) 07 October 2004 (2004-10-07)<br>claims 1, 6-8, p. 3, lines 9-12, p. 7, lines 15-23, p. 16, lines 12-18, examples | 1-8 |
| A | JP 2011-202005 A (SEKISUI PLASTICS CO., LTD.) 13 October 2011 (2011-10-13)<br>claim 1, paragraphs [0023]-[0025] | 1-8 |
| A | JP 2002-284916 A (HITACHI CHEMICAL CO LTD) 03 October 2002 (2002-10-03)<br>claim 1, paragraphs [0007]-[0008], [0010]-[0013] | 1-8 |
| A | JP 2009-114432 A (KANEKA CORP) 28 May 2009 (2009-05-28)<br>claims 1, 4-5, examples | 1-8 |
| A | JP 2011-042718 A (JSP CORP) 03 March 2011 (2011-03-03)<br>claims 1, 7-9, examples | 1-8 |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| **02 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 541 843 A1

**INTERNATIONAL SEARCH REPORT**

International application No.

**PCT/JP2023/021685**

### C. DOCUMENTS CONSIDERED TO BE RELEVANT

| Category* | Citation of document, with indication, where appropriate, of the relevant passages | Relevant to claim No. |
|---|---|---|
| A | WO 2016/136460 A1 (SEKISUI PLASTICS CO., LTD.) 01 September 2016 (2016-09-01) claims 1, 5-7, examples, fig. 1-3 | 1-8 |

Form PCT/ISA/210 (second sheet) (January 2015)

33

**INTERNATIONAL SEARCH REPORT**
Information on patent family members

International application No.

**PCT/JP2023/021685**

| Patent document cited in search report | | | Publication date (day/month/year) | Patent family member(s) | | | Publication date (day/month/year) |
|---|---|---|---|---|---|---|---|
| WO | 2016/047382 | A1 | 31 March 2016 | US<br>claims 1-4, paragraphs [0054]-[0068] | 2017/0275432 | A1 | |
| JP | 2016-190991 | A | 10 November 2016 | (Family: none) | | | |
| WO | 2004/085527 | A1 | 07 October 2004 | US<br>claims 1, 6-16, paragraphs [0008], [0040]-[0041], [0107]-[0108] | 2006/0063847 | A1 | |
| JP | 2011-202005 | A | 13 October 2011 | (Family: none) | | | |
| JP | 2002-284916 | A | 03 October 2002 | (Family: none) | | | |
| JP | 2009-114432 | A | 28 May 2009 | (Family: none) | | | |
| JP | 2011-042718 | A | 03 March 2011 | US<br>claims 1, 8-9, examples | 2012/0149792 | A1 | |
| WO | 2016/136460 | A1 | 01 September 2016 | CN | 107250184 | A | |

Form PCT/ISA/210 (patent family annex) (January 2015)

**EP 4 541 843 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005097555 A
- JP 2016190991 A
- JP 2009114432 A
- JP 2011042718 A